(19) Europäisches Patentamt
European Patent Office
Office européen des brevets

(11) EP 4 503 206 A1

(12) **EUROPEAN PATENT APPLICATION**
published in accordance with Art. 153(4) EPC

(43) Date of publication:
**05.02.2025 Bulletin 2025/06**

(21) Application number: **23778884.9**

(22) Date of filing: **08.02.2023**

(51) International Patent Classification (IPC):
***H01M 4/86*** *(2006.01)* ***C08G 61/10*** *(2006.01)*
***H01B 1/06*** *(2006.01)* ***H01M 4/90*** *(2006.01)*
***H01M 8/10*** *(2016.01)*

(52) Cooperative Patent Classification (CPC):
**C08G 61/10; H01B 1/06; H01M 4/86; H01M 4/90; H01M 8/10;** Y02E 60/50

(86) International application number:
**PCT/JP2023/004243**

(87) International publication number:
**WO 2023/188848 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022058315**
**09.08.2022 JP 2022126985**

(71) Applicant: **Nissan Chemical Corporation**
**Tokyo 103-6119 (JP)**

(72) Inventors:
- **KEMMIZAKI, Yuta**
**Funabashi-shi, Chiba 274-0052 (JP)**
- **NAKAZAWA, Taichi**
**Funabashi-shi, Chiba 274-0052 (JP)**

(74) Representative: **Mewburn Ellis LLP**
**Aurora Building**
**Counterslip**
**Bristol BS1 6BX (GB)**

(54) **POLYMER COMPOUND HAVING SULFONIC ACID GROUP, CATALYST COMPOSITION THAT CONTAINS SAID COMPOUND, AND POLYMER ELECTROLYTE FUEL CELL**

(57) A catalyst composition comprising a polymer compound having a structure represented by the following general formula (I), a catalyst, and a catalyst support, and a polymer compound having a structure represented by the following general formula (I):

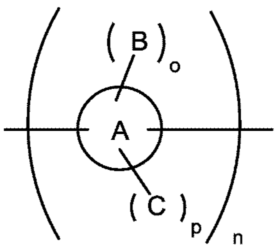

(I)

wherein n is 1 to 2, o is 1 to 3, and p is 0 to 3, wherein the relationship:
$o + p \leq 4$ is satisfied, and
each of B and C is independently a group having at least one member selected from the group consisting of an alkyl group, an alkyl group having an ether linkage, a cycloalkyl group, and an aromatic group, which is bonded to ring A through a single heteroatom, or a heterocycle having a heteroatom therein bonded to ring A, and the heterocycle and group of B and C optionally have a substituent,
wherein B and C are the same or different, at least one of B and C has an aromatic ring, and at least one aromatic ring of B and C has at least one sulfonic acid group, and wherein carbons of ring A, except the carbons bonded to the principal chain and the carbons to which B and C are bonded, are optionally substituted by a halogen atom.

EP 4 503 206 A1

Fig. 1

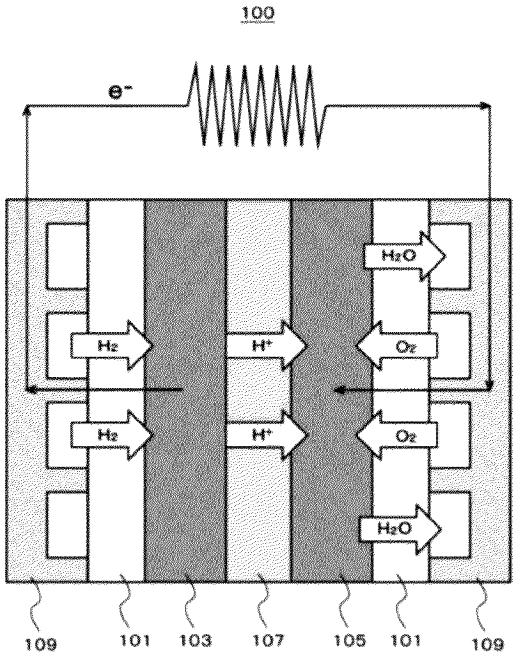

## Description

Field of the Invention

The present invention relates to a polymer compound having a sulfonic acid group, a catalyst composition comprising the compound, and a polymer electrolyte fuel cell using the compound.

Background Art

A polymer electrolyte fuel cell (PEFC) has an anode catalyst layer, a cathode catalyst layer, and a solid electrolyte membrane disposed between the catalyst layers.

The electrolyte used in a solid electrolyte membrane is required to have proton conductive properties, gas barrier properties, electronic insulation properties, and durability. A fluorine ionomer is used as an electrolyte that satisfies such properties.

With respect to the electrolyte used in a solid electrolyte membrane and a catalyst layer, a hydrocarbon ionomer having an aromatic skeleton and having a sulfonic acid group introduced into the skeleton has been known (see, for example, patent documents 1 and 2).

With respect to the composition used in a solid electrolyte membrane, a composition comprising a fluorinated polymer having a sulfonic acid group and a fluorinated aromatic compound having a functional group capable of reacting with the sulfonic acid group of the fluorinated polymer has been known (see, for example, patent document 3).

PRIOR ART REFERENCES

Patent Documents

Patent document 1: U.S. Patent No. 7301002
Patent document 2: Japanese Unexamined Patent Publication No. 2015-95424
Patent document 3: Japanese Patent Application prior-to-examination Publication (kohyo) No. 2014-522437

Summary of the Invention

Problems to be Solved by the Invention

Under the circumstances, the development of a hydrocarbon ionomer having introduced a sulfonic acid group and having more excellent electricity generation properties than those of a conventional fluorine ionomer is desired.

An object of the first embodiment of the present invention is to provide a catalyst composition that when the composition is used in a catalyst layer for a polymer electrolyte fuel cell, the polymer electrolyte fuel cell exhibits excellent electricity generation properties.

An object of the second embodiment of the present invention is to provide a compound that when the compound is used as an electrolyte in a catalyst layer for a polymer electrolyte fuel cell, the polymer electrolyte fuel cell exhibits excellent electricity generation properties.

Means for Solving the Problems

The present invention is, for example, the following [1] to [12].

[1] A catalyst composition comprising a polymer compound having a structure represented by the following general formula (I), a catalyst, and a catalyst support:

[Chemical formula 1]

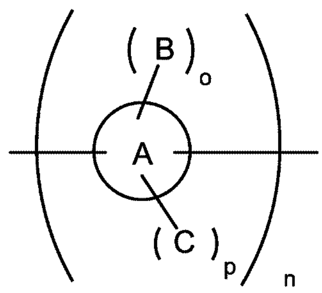

(I)

wherein n is 1 to 2, o is 1 to 3, and p is 0 to 3, wherein the relationship:

o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group, which is bonded to ring A through a single heteroatom, or a heterocycle having a heteroatom therein bonded to ring A, and the heterocycle and group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

[2] The catalyst composition according to item [1] above, wherein the polymer compound having a structure represented by the general formula (I) above is a compound represented by the general formula (II):

[Chemical formula 2]

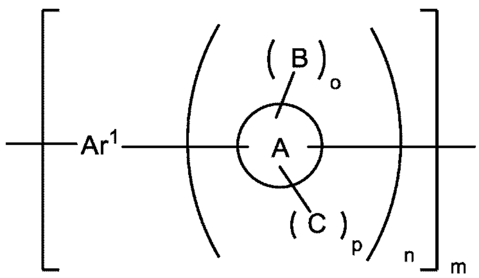

(II)

wherein $Ar^1$ is an aromatic group having 6 to 40 carbon atoms and optionally having a substituent, m is 3 or more, and ring A, B, C, n, o, and p are as defined for the general formula (I).

[3] The catalyst composition according to item [2] above, wherein, in the general formula (II), $Ar^1$ is a structure represented by the following general formula (III):

[Chemical formula 3]

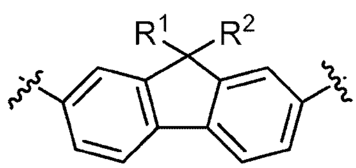

(III)

wherein each of $R^1$ and $R^2$ is independently an alkyl group, a cycloalkyl group, or an aromatic group, each optionally having a substituent, and $R^1$ and $R^2$ optionally together form a ring.

[4] The catalyst composition according to any one of items [1] to [3] above, wherein, in the general formula (I), each of the structures represented by B and C is independently a structure represented by the following general formula (IV) or (V), wherein the ring and group contained in the general formula (IV) or (V) optionally have a substituent, and wherein at least one aromatic ring of the general formula (IV) or (V) has at least one sulfonic acid group:

[Chemical formula 4]

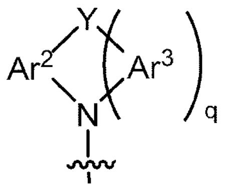

(IV)

wherein each of $Ar^2$ and $Ar^3$ is independently a benzene ring or a naphthalene ring, each optionally having a substituent, Y is a single bond, $-CH_2-$, or carbonyl, and q is 0 or 1, wherein when q is 0, one end of Y and one end of N are linked to each other,

[Chemical formula 5]

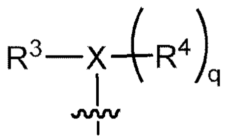

(V)

wherein q is 0 or 1, X is a heteroatom, and each of $R^3$ and $R^4$ is independently an alkyl group, an alkyl group having an ether linkage, a cycloalkyl group, a phenyl group, or a naphthyl group, each optionally having a substituent, and $R^3$ and $R^4$ optionally together form a ring containing X.

[5] The catalyst composition according to any one of items [1] to [4] above, wherein, in the general formula (I), when the heterocycle or group of B and C has a substituent, the substituent is independently an alkyl group having 1 to 3 carbon atoms, a haloalkyl group having 1 to 3 carbon atoms, or an alkoxy group having 1 to 3 carbon atoms.
[6] The catalyst composition according to any one of items [1] to [5] above, wherein, in the general formula (I), the heteroatom is a sulfur atom or a nitrogen atom.
[7] The catalyst composition according to any one of items [4] to [6] above, wherein the B in the general formula (I) is the structure represented by the general formula (IV), or the structure represented by the general formula (V) wherein $R^3$ is a phenyl group or a naphthyl group, each optionally having a substituent, $R^4$ is an alkyl group, an alkyl group having an ether linkage, a cycloalkyl group, a phenyl group, or a naphthyl group, each optionally having a substituent, and $R^3$ and $R^4$ optionally together form a ring containing X, wherein at least one aromatic ring of the B has at least one sulfonic acid group, and
wherein, in the general formula (I), p is not 0, and the C in the general formula (I) is the structure represented by the general formula (V) wherein each of $R^3$ and $R^4$ is independently an alkyl group, an alkyl group having an ether linkage, or a cycloalkyl group, each optionally having a substituent, and $R^3$ and $R^4$ optionally together form a ring containing X.
[8] The catalyst composition according to any one of items [1] to [7] above, which is for use in a polymer electrolyte fuel cell.
[9] A catalyst layer for a polymer electrolyte fuel cell, comprising the catalyst composition according to item [8] above.
[10] A membrane electrode assembly having a solid electrolyte membrane, a gas diffusion layer, and the catalyst layer according to item [9] above.
[11] A polymer electrolyte fuel cell having the membrane electrode assembly according to item [10] above.
[12] A polymer compound having a structure represented by the following general formula (I):

[Chemical formula 6]

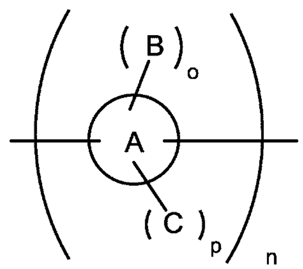

(I)

wherein n is 1 to 2, o is 1 to 3, and p is 0 to 3, wherein the relationship:

o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group, which is bonded to ring A through a single heteroatom, or a heterocycle having a heteroatom therein bonded to ring A, and the heterocycle and group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

[13] The polymer compound according to item [12] above, wherein the polymer compound having a structure represented by the general formula (I) above is a compound represented by the general formula (II):

[Chemical formula 7]

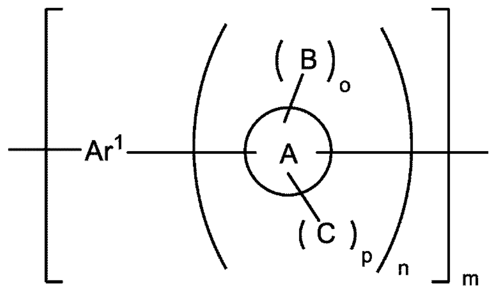

(II)

wherein $Ar^1$ is an aromatic group having 6 to 40 carbon atoms and optionally having a substituent, m is 3 or more, and ring A, B, C, n, o, and p are as defined for the general formula (I).
[14] The polymer compound according to item [13] above, wherein, in the general formula (II), $Ar^1$ is a structure represented by the following general formula (III):

[Chemical formula 8]

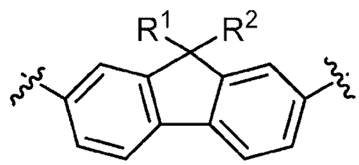

(III)

wherein each of $R^1$ and $R^2$ is independently an alkyl group, a cycloalkyl group, or an aromatic group, each optionally having a substituent, and $R^1$ and $R^2$ optionally together form a ring.
[15] The polymer compound according to item [14] above, which is used as an electrolyte in an anode catalyst layer and/or a cathode catalyst layer for a polymer electrolyte fuel cell.

[16] A catalyst layer for a polymer electrolyte fuel cell, comprising the compound according to item [14] or [15] above.

Effects of the Invention

The catalyst composition according to the first embodiment of the present invention is advantageous in that when the composition is used in a catalyst layer for a polymer electrolyte fuel cell, the polymer electrolyte fuel cell exhibits excellent electricity generation properties.

The compound according to the second embodiment of the present invention is advantageous in that when the compound is used as an electrolyte in a catalyst layer for a polymer electrolyte fuel cell, the polymer electrolyte fuel cell exhibits excellent electricity generation properties.

BRIEF DESCRIPTION OF THE DRAWING

[Fig. 1] A cross-sectional view diagrammatically showing the construction of a polymer electrolyte fuel cell.

MODE FOR CARRYING OUT THE INVENTION

In the present specification, the ionomer means a polymer material having a proton conductive function.

<<First embodiment of the present invention>>

The first embodiment of the present invention is a catalyst composition comprising a polymer compound having a structure represented by the following general formula (I), a catalyst, and a catalyst support:

[Chemical formula 9]

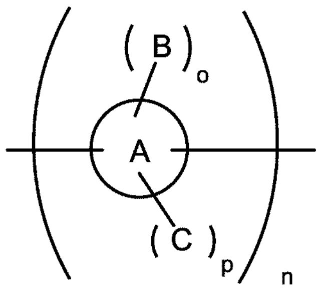

(I)

wherein n is 1 to 2, o is 1 to 3, and p is 0 to 3, wherein the relationship:

o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group, which is bonded to ring A through a single heteroatom, or a heterocycle having a heteroatom therein bonded to ring A, and the heterocycle and group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

The catalyst composition of the first embodiment is advantageously used in a catalyst layer for a polymer electrolyte fuel cell.

[Polymer electrolyte fuel cell]

Fig. 1 is a cross-sectional view diagrammatically showing the construction of a polymer electrolyte fuel cell (hereinafter, frequently referred to as "fuel cell").

Polymer electrolyte fuel cell 100 has anode catalyst layer 103, cathode catalyst layer 105, and solid electrolyte

membrane 107 disposed between the catalyst layers, and each catalyst layer has gas diffusion layer (hereinafter, frequently referred to as "GDL") 101 as an outside layer. This construction is called a membrane electrode assembly (hereinafter, frequently referred to as "MEA"). A polymer electrolyte fuel cell generally has the membrane electrode assembly (MEA) disposed between separators 109.

The catalyst supported on a catalyst support is referred to as electrocatalyst. In the present specification, anode catalyst layer 103 and/or cathode catalyst layer 105 is frequently referred to simply as "catalyst layer".

At least one of anode catalyst layer 103 and cathode catalyst layer 105 of the fuel cell contains a catalyst composition comprising a polymer compound having a structure represented by the general formula (I) below, a catalyst, and a catalyst support, and, from the viewpoint of the suppression of overvoltage increase caused due to deterioration of oxygen gas diffusion properties during the high current driving, it is preferred that at least cathode catalyst layer 105 contains the catalyst composition of the first embodiment.

The catalyst composition comprises a polymer compound having a structure represented by the following general formula (I). The polymer compound having a structure represented by the following general formula (I) is used as an electrolyte.

[Chemical formula 10]

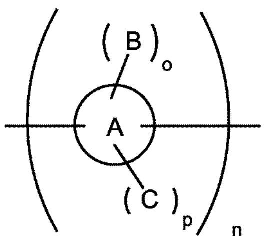

(I)

Wherein n is 1 to 2, o is 1 to 3, and p is 0 to 3, wherein the relationship:

o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group, which is bonded to ring A through a single heteroatom, or a heterocycle having a heteroatom therein bonded to ring A, and the heterocycle and group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

The polymer compound having a structure represented by the general formula (I) preferably has a weight average molecular weight of 8,000 to 500,000, more preferably 20,000 to 200,000, further preferably 20,000 to 120,000, as measured by the gel permeation chromatography method described in the Examples.

In the general formula (I), n is 1 to 2, preferably 2.

In the general formula (I), o is 1 to 3, and p is 0 to 3. Further, the relationship: o + p <_ 4 is satisfied, more preferably o + p = 4.

A polymer compound is a mixture of polymer compounds having a polymerization degree in the specific range, and therefore n, o, and p are an average of the polymer compounds having different polymerization degrees in such a mixture.

In the general formula (I), ring A is a benzene ring or a naphthalene ring, preferably a benzene ring.

When ring A is a benzene ring, the general formula (I) is represented by the following general formula (i):

[Chemical formula 11]

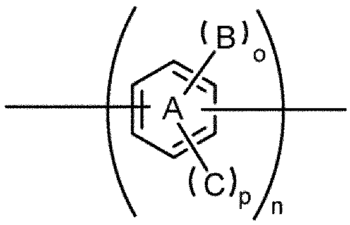

(i)

wherein carbons of ring A, B, C, n, o, and p are as defined for the general formula (I).

The weight average molecular weight of the polymer compound having a structure represented by the general formula (i) is similar to that of the polymer compound having a structure represented by the general formula (I).

In the general formulae (I) and (i), each of B and C is independently a group having at least one member selected from the group consisting of an alkyl group, an alkyl group having an ether linkage, a cycloalkyl group, and an aromatic group, which is bonded to ring A through a single heteroatom, preferably through an oxygen atom, a sulfur atom, or a nitrogen atom, more preferably through one member selected from the group consisting of -O-, -S-, and -N-, or a heterocycle having a heteroatom therein bonded to ring A. The wording "through a single heteroatom" means that the at least one member is bonded through a linker comprised of a single heteroatom, and does not include the case where the at least one member is bonded through a linker comprised of two or more heteroatoms, such as $-SO_2-$.

It is preferred that the at least one member selected from the group consisting of an alkyl group, an alkyl group having an ether linkage, a cycloalkyl group, and an aromatic group is directly bonded to a heteroatom. The expression "directly" means that, for example, an aromatic group and a heteroatom do not have a hydrocarbon chain between them.

It is preferred that each of B and C is independently a group having at least one member selected from the group consisting of a linear or branched alkyl group having 1 to 16 carbon atoms, a linear or branched alkyl group having 1 to 16 carbon atoms and having an ether linkage, a cycloalkyl group having 1 to 16 carbon atoms, a phenyl group, and a naphthyl group, which is bonded to ring A through a single heteroatom, or a heterocycle having a heteroatom therein bonded to ring A and containing one member selected from the group consisting of a benzene ring, a naphthalene ring, and an ether linkage.

The heterocycle and group of B and C optionally have a substituent. B and C may be the same or different, and at least one of B and C has an aromatic ring, and at least one aromatic ring of B and C has at least one sulfonic acid group.

The heteroatom in B and C is preferably an oxygen atom, a sulfur atom, or a nitrogen atom, more preferably a sulfur atom or a nitrogen atom, further preferably a nitrogen atom.

A preferred mode of the heteroatom in B and C, i.e., the one member selected from the group consisting of -O-, -S-, and -N- is preferably -S- or -N-, more preferably - S-.

In the case where the heterocycle or group of B and C has a substituent, when there are two or more substituents, it is preferred that each substituent is independently an alkyl group having 1 to 3 carbon atoms, a haloalkyl group having 1 to 3 carbon atoms, or an alkoxy group having 1 to 3 carbon atoms.

It is preferred that, in the general formulae (I) and (i), each of the structures represented by B and C is independently a structure represented by the following general formula (IV) or (V), wherein the ring and group contained in the general formula (IV) or (V) optionally have a substituent, and wherein at least one aromatic ring of the general formula (IV) or (V) has at least one sulfonic acid group.

[Chemical formula 12]

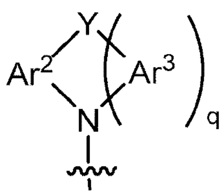

(IV)

In the general formula (IV), each of $Ar^2$ and $Ar^3$ is independently a benzene ring or a naphthalene ring, each optionally having a substituent, Y is a single bond, $-CH_2$, or carbonyl, and q is 0 or 1, wherein when q is 0, one end of Y and one end of N (nitrogen atom) are linked to each other.

When there are two or more substituents, it is preferred that each substituent is independently an alkyl group having 1 to 3 carbon atoms, a haloalkyl group having 1 to 3 carbon atoms, or an alkoxy group having 1 to 3 carbon atoms.

[Chemical formula 13]

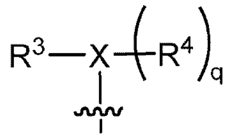

(V)

In the general formula (V), q is 0 or 1.

X is a heteroatom, and each of $R^3$ and $R^4$ is independently an alkyl group, an alkyl group having an ether linkage, a cycloalkyl group, a phenyl group, or a naphthyl group, each optionally having a substituent, preferably a linear or branched alkyl group having 1 to 16 carbon atoms, a linear or branched alkyl group having 1 to 16 carbon atoms and having an ether linkage, a cycloalkyl group having 1 to 16 carbon atoms, a phenyl group, or a naphthyl group.

$R^3$ and $R^4$ optionally together form a ring containing X.

When there are two or more substituents, it is preferred that each substituent is independently an alkyl group having 1 to 3 carbon atoms, a haloalkyl group having 1 to 3 carbon atoms, or an alkoxy group having 1 to 3 carbon atoms.

In the general formula (IV) above, Y is preferably a single bond.

In the general formula (V) above, X is preferably a sulfur atom or a nitrogen atom.

As an example of the structure represented by the general formula (IV), there can be mentioned a structure represented by the following general formula (VI) or (VII) wherein the at least one aromatic ring has at least one sulfonic acid group.

[Chemical formula 14]

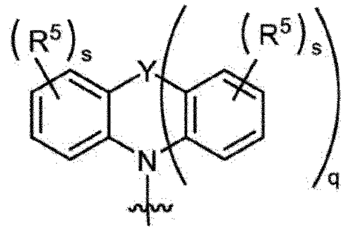

(VI)

[Chemical formula 15]

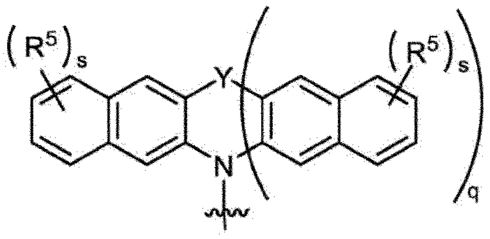

(VII)

In the general formulae (VI) and (VII), Y is a single bond, $-CH_2-$, or carbonyl, and q is 0 or 1, wherein when q is 0, one end of Y and one end of N (nitrogen atom) are linked to each other, s is an integer of 1 to 6, and each $R^5$ is independently an alkyl group having 1 to 3 carbon atoms, a haloalkyl group having 1 to 3 carbon atoms, or an alkoxy group having 1 to 3 carbon atoms. Y is preferably a single bond.

As examples of the structure represented by the general formula (V) wherein each of $R^3$ and $R^4$ is independently a phenyl group or a naphthyl group, each optionally having a substituent, there can be mentioned structures represented by the following general formulae (VIII) to (X) wherein the at least one aromatic ring has at least one sulfonic acid group. The general formula (VIII) is an example of the formula (V) wherein X is a sulfur atom and q = 0. The general formulae (IX) and (X) are an example of the formula (V) wherein X is a nitrogen atom and q = 1.

[Chemical formula 16]

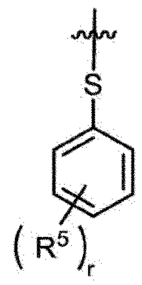

(VIII)

[Chemical formula 17]

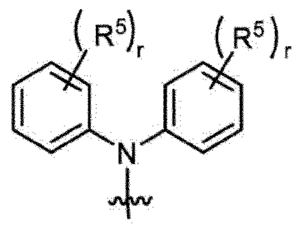

(IX)

[Chemical formula 18]

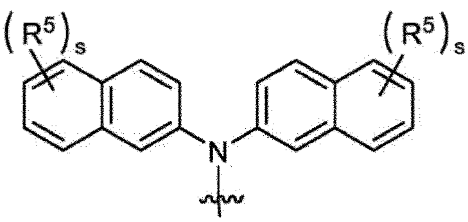

(X)

In the general formulae (VIII) to (X), r is an integer of 1 to 5, s is an integer of 1 to 6, and each $R^5$ is independently an alkyl group having 1 to 3 carbon atoms, a haloalkyl group having 1 to 3 carbon atoms, or an alkoxy group having 1 to 3 carbon atoms.

As an example of the structure represented by the general formula (V) wherein $R^3$ is a phenyl group or a naphthyl group, each optionally having a substituent, and $R^4$ is an alkyl group, an alkyl group having an ether linkage, or a cycloalkyl group, each optionally having a substituent, there can be mentioned a structure represented by the following general formula (XI) wherein the aromatic ring has at least one sulfonic acid group.

[Chemical formula 19]

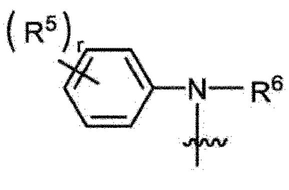

(XI)

In the general formula (XI), r is an integer of 1 to 5, each $R^5$ is independently an alkyl group having 1 to 3 carbon atoms, a haloalkyl group having 1 to 3 carbon atoms, or an alkoxy group having 1 to 3 carbon atoms, and $R^6$ is a linear or branched alkyl group having 1 to 16 carbon atoms, a linear or branched alkyl group having 1 to 16 carbon atoms and having an ether linkage, or a cycloalkyl group having 1 to 16 carbon atoms, each optionally having a substituent $R^5$.

As examples of the structure represented by the general formula (V) wherein each of $R^3$ and $R^4$ is independently an alkyl group, an alkyl group having an ether linkage, or a cycloalkyl group, each optionally having a substituent, and $R^3$ and $R^4$ optionally together form a ring containing X, there can be mentioned structures represented by the general formulae (XII) to (XIV) below. The general formula (XIV) below corresponds to the structure of the general formula (V)

wherein $R^3$ and $R^4$ are an alkyl group having an ether linkage and together form a ring containing X.

[Chemical formula 20]

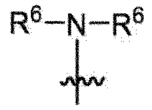

(XII)

In the general formula (XII), each $R^6$ is independently a linear or branched alkyl group having 1 to 12 carbon atoms, a linear or branched alkyl group having 1 to 12 carbon atoms and having an ether linkage, or a cycloalkyl group having 1 to 12 carbon atoms, each optionally having a substituent selected from the group consisting of an alkyl group having 1 to 3 carbon atoms, a haloalkyl group having 1 to 3 carbon atoms, and an alkoxy group having 1 to 3 carbon atoms.

[Chemical formula 21]

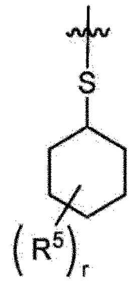

(XIII)

In the general formula (XIII), r is an integer of 1 to 5, and each $R^5$ is independently an alkyl group having 1 to 3 carbon atoms, a haloalkyl group having 1 to 3 carbon atoms, or an alkoxy group having 1 to 3 carbon atoms.

[Chemical formula 22]

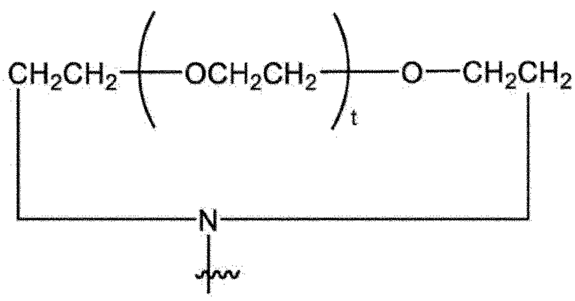

(XIV)

In the general formula (XIV), t is an integer of 1 to 6.

B and C may be the same, but are preferably different from each other.

When B and C are the same, it is preferred that B and C are the structure of the general formula (VI), (VIII), or (IX) wherein the at least one aromatic ring has at least one sulfonic acid group.

Further, even when B and C are different from each other, it is preferred that B and C are the same structure of any one of the general formulae (VI) to (XIV) wherein only a substituent other than the sulfonic acid group is different, and wherein the at least one aromatic ring has at least one sulfonic acid group.

When B and C are different from each other, it is preferred that, in the general formulae (I) and (i), p is not 0, and B is the structure represented by the general formula (IV), or the structure represented by the general formula (V) wherein $R^3$ is a phenyl group or a naphthyl group, each optionally having a substituent, $R^4$ is an alkyl group, an alkyl group having an ether linkage, a cycloalkyl group, a phenyl group, or a naphthyl group, each optionally having a substituent, and $R^3$ and $R^4$ optionally together form a ring containing X, wherein at least one aromatic ring of the B has at least one sulfonic acid group, and C is the structure represented by the general formula (V) wherein each of $R^3$ and $R^4$ is independently an alkyl group, an alkyl group having an ether linkage, or a cycloalkyl group, each optionally having a substituent, and $R^3$ and $R^4$ optionally together form a ring containing X, and it is more preferred that B is a structure selected from the group consisting of the general formulae (VI) to (XI) above wherein the at least one aromatic ring has at least one sulfonic acid group, and C is

selected from the group consisting of the general formulae (XII) to (XIV) above. By virtue of such a structure, the amount of the sulfonic acid group introduced into the polymer compound having a structure represented by the general formula (I) can be controlled.

The polymer compound having a structure represented by the general formula (I) is preferably a compound represented by the general formula (II).

[Chemical formula 23]

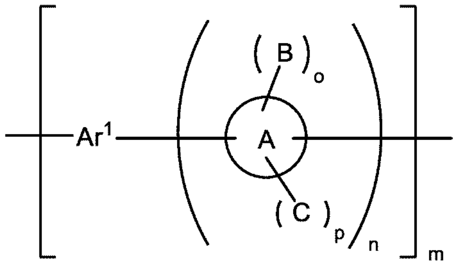

(II)

The compound represented by the general formula (II) is more preferably a compound represented by the following general formula (ii).

[Chemical formula 24]

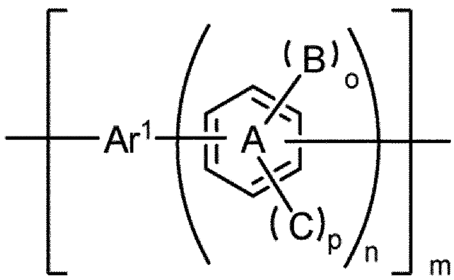

(ii)

In the general formula (II), ring A, B, C, n, o, and p are as defined for the general formula (I). In the general formula (ii), carbons of ring A, B, C, n, o, and p are as defined for the general formula (I).

In the general formulae (II) and (ii), m is 3 or more, preferably 3 to 100, more preferably 15 to 60.

In the general formulae (II) and (ii), $Ar^1$ is an aromatic group having 6 to 40 carbon atoms and optionally having a substituent. The number of carbon atoms includes the number of carbon atoms of a substituent. Examples of aromatic groups include divalent groups corresponding to, for example, benzene, naphthalene, acetylene, biphenyl, indacene, biphenylene, acenaphthylene, acenaphthene, fluorene, phenalene, phenanthrene, tetralin, and anthracene. When there are two or more substituents, the substituents are independently those similar to $R^1$ and $R^2$ in the general formula (III) below.

$Ar^1$ is different from the structure represented by the general formula (I).

In the general formulae (II) and (ii), $Ar^1$ is preferably a structure represented by the following general formula (III).

[Chemical formula 25]

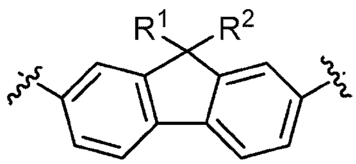

(III)

In the general formula (III), each of $R^1$ and $R^2$ is independently an alkyl group, a cycloalkyl group, or an aromatic group, each optionally having a substituent, preferably a linear or branched alkyl group having 1 to 15 carbon atoms, a cycloalkyl group having 4 to 12 carbon atoms, a phenyl group, or a naphthyl group, each optionally having a substituent, more preferably a linear or branched alkyl group having 5 to 11 carbon atoms, a cycloalkyl group having 4 to 6 carbon atoms, or a phenyl group, each optionally having a substituent, further preferably a linear or branched alkyl group having 5 to 9 carbon atoms and optionally having a substituent. $R^1$ and $R^2$ optionally together form a ring.

When there are two or more substituents, it is preferred that each substituent is independently an alkyl group having 1 to 3 carbon atoms, a haloalkyl group having 1 to 3 carbon atoms and/or an alkoxy group having 1 to 3 carbon atoms.

The polymer compound having a structure represented by the general formula (I) or (i) preferably has an ion-exchange capacity (IEC ( mmol/g)) of 0.1 to 6, more preferably 1 to 5, further preferably 1.5 to 4. The number of sulfonic acid group or groups of the polymer compound having a structure represented by the general formula (I) is preferably a number such that the ion-exchange capacity is in the above range.

In the general formulae (I) and (i), carbons of ring A, except the carbons bonded to the principal chain and the carbons to which B and C are bonded, are optionally substituted by a halogen atom. The "principal chain" means the principal chain of the polymer compound having a structure represented by the general formula (I).

The halogen atom is preferably a fluorine atom.

The number of substitution of ring A with a halogen atom or atoms is preferably 0 to 5, more preferably 0 to 3, per ring A.

[Method for producing the polymer compound having a structure represented by the general formula (I) or (i)]

The polymer compound having a structure represented by the general formula (I) can be produced by the below-described method, for example, with reference to the non-patent document, Macromolecules 2013, 46, 370-374.

In the (Formula 1) and (Formula 2) below, ring A is as defined for the general formula (I), n, o, and p are as defined for the general formula (I), $Ar^1$ and m are as defined for the general formula (II), and B' and C' are as defined for B and C in the general formulae (I), except that B' and C' do not have a sulfonic acid group.

[Chemical formula 26]

(Formula 1)

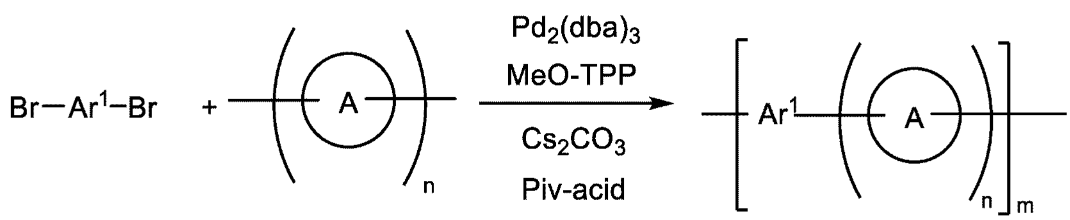


As shown in (Formula 1), a bromination product of $Ar^1$ and a compound forming ring A are first reacted with each other in a solvent, such as cyclopentyl methyl ether, in the presence of a metal catalyst, such as tris(dibenzylideneacetone) dipalladium(0), tris(o-methoxyphenyl)phosphine, cesium carbonate, and pivalic acid.

The reaction temperature is generally 100 to 110°C. With respect to the solvent used in the present reaction, any solvent can be used as long as the solvent can dissolve the raw materials therein, and, as a solvent other than cyclopentyl methyl ether, for example, dimethylacetamide or toluene can be used. With respect to the metal catalyst, as a metal catalyst other than tris(dibenzylideneacetone)dipalladium(0), palladium(II) acetate, tris(dibenzylideneacetone)dipalladium(0) (chloroform addition product), chloro[(tri-tert-butylphosphine)-2-(2-aminobiphenyl)]palladium(II), or trans-d(μ-acetato)bis[o-di-o-tolylphosphinobenzyldipalladium(II) can be used.

[Chemical formula 27]

(Formula 2)

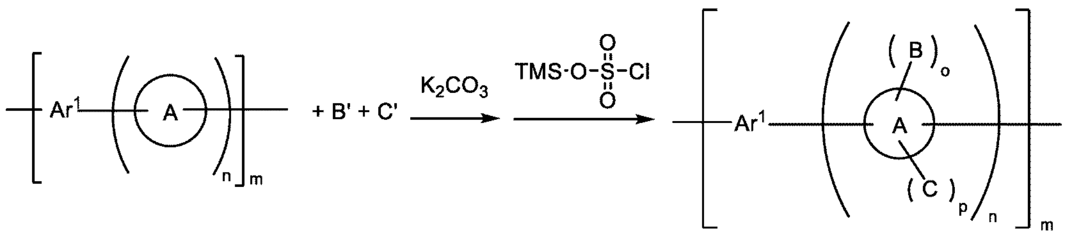


Then, for example, with reference to the non-patent document, Macromolecules 2021, 54, 725-735, as shown in (Formula 2), the compound obtained in (Formula 1), B', and C' are reacted in an N,N-dimethylformamide solvent in the

presence of a base, such as potassium carbonate, to introduce B' and C' into ring A of the compound obtained in (Formula 1). The ratio of the B' and C' introduced can be controlled by appropriately selecting the amounts of the B' and C' added. The reaction temperature is generally 110 to 130°C. With respect to the base, as a base other than potassium carbonate, sodium hydride, potassium tert-butoxide, or diazabicycloundecene can be used.

Finally, the thus obtained compound is reacted with a sulfonating agent in a dichloromethane solvent to introduce at least one sulfonic acid group into at least one aromatic ring of B' and C', forming B and C. A sulfonic acid group is selectively introduced into any position of the aromatic ring of B' and C' having smaller steric hindrance than $Ar^1$ (unit having the above-shown fluorene skeleton) constituting the principal chain. The reaction temperature is generally 25 to 35°C. Examples of sulfonating agents include trimethylsilyl chlorosulfonate, sulfonyl chloride, fuming sulfuric acid, and sulfuric acid.

[Catalyst]

With respect to the catalyst used in anode catalyst layer 103 and cathode catalyst layer 105, there is no particular limitation and a known metal catalyst and a known nonmetal catalyst can be used. Examples of metal catalysts include metals, such as platinum, gold, silver, ruthenium, iridium, rhodium, palladium, osmium, tungsten, lead, iron, chromium, cobalt, nickel, manganese, vanadium, molybdenum, gallium, and aluminum, alloys thereof, and core/shell structures thereof. Examples of nonmetal catalysts include a carbon alloy catalyst.

The carbon alloy catalyst is a carbon material obtained by heating a raw material containing an organic material and a metal to cause carbonization, and is known to exhibit catalytic activity. With respect to the organic material, there is no particular limitation as long as the material can undergo carbonization, but examples include thermosetting resins, such as a melamine resin, an epoxy resin, and a phenolic resin. With respect to the metal, there is no particular limitation, and a known metal can be used, but, for example, there can be mentioned iron, cobalt, and titanium.

[Catalyst support]

Examples of catalyst supports include carbon black, such as channel black, furnace black, and thermal black, and carbon materials, such as carbon nanotubes, activated carbon obtained by subjecting various materials containing a carbon atom to carbonization for activation treatment, coke, natural graphite, artificial graphite, and graphitized carbon, and preferred is carbon black because it has high specific surface area and excellent electronic conductive properties.

The polymer compound having a structure represented by the general formula (I) above is used as an electrolyte. With respect to the electrolyte, the polymer compound having a structure represented by the general formula (I) may be solely used, and the compound represented by the general formula (I) and another arbitrary electrolyte, for example, at least one member selected from the group consisting of a fluorine sulfonic acid polymer, such as Nafion (registered trademark; manufactured by DuPont Inc.), Aquivion (registered trademark; manufactured by Solvay S.A.), Flemion (registered trademark; manufactured by AGC Inc.), or Aciplex (registered trademark; manufactured by Asahi Kasei Corporation), a hydrocarbon sulfonic acid polymer, and a partially fluorine introduced-type hydrocarbon sulfonic acid polymer may be used in combination.

A method for forming anode catalyst layer 103 and cathode catalyst layer 105 is described. A catalyst composition comprising the polymer compound having a structure represented by the general formula (I) above, a catalyst, and a catalyst support is prepared as a catalyst ink, and then the catalyst ink is applied onto an intended substrate and dried to form a catalyst layer. The catalyst composition may contain, in addition to the polymer compound having a structure represented by the general formula (I) as an electrolyte, an electrolyte other than the polymer compound having a structure represented by the general formula (I).

As examples of the intended substrate, there can be mentioned a polymer electrolyte membrane, a GDL, and a sheet formed from a fluororesin, and a catalyst layer can be formed by a known method. When the catalyst ink is applied to a sheet formed from a fluororesin, the applied catalyst layer is transferred to a polymer electrolyte membrane. The sheet formed from a fluororesin is generally a sheet formed from polytetrafluoroethylene (PTFE).

The polymer compound having a structure represented by the general formula (I) can cover the catalyst supported on a catalyst support with an appropriate thickness, and therefore exhibits excellent gas diffusion properties and proton conductive properties while maintaining the function of the catalyst. The amount of the polymer compound having a structure represented by the general formula (I) used for the catalyst is preferably 0.1 to 10 times the catalyst.

The catalyst composition used as a catalyst ink may contain a binder and a solvent.

For suppressing lowering of the electronic conductive properties in the electrocatalyst, a binder can be used as a component for binding the catalyst support together. Examples of binders include fluorine sulfonic acid polymers, such as polytetrafluoroethylene (PTFE), polyvinylidene fluoride (PVDF), an ethylenepropylene-diene copolymer (EPDM), Nafion (registered trademark; manufactured by DuPont Inc.), Aquivion (registered trademark; manufactured by Solvay S.A.), Flemion (registered trademark; manufactured by AGC Inc.), and Aciplex (registered trademark; manufactured by Asahi

Kasei Corporation). These binders may be used individually or in combination.

Examples of solvents include polar solvents, such as water, methanol, ethanol, 1-propanol, 2-propanol, 1-butanol, 2-butanol, isobutyl alcohol, tert-butyl alcohol, pentanol, dimethyl sulfoxide, and N,N-dimethylformamide. With respect to the solvent, water, methanol, ethanol, 1-propanol, 2-propanol, 1-butanol, 2-butanol, and isobutyl alcohol are preferred. These solvents may be used individually or in combination.

The amounts of the individual components contained in the catalyst composition are appropriately controlled according to the purpose, but, based on the mass of the solids of the catalyst composition determined by removing the weight of the solvent from the composition (100% by mass), the amount of the catalyst is preferably 10 to 60% by mass, more preferably 30 to 50% by mass, the amount of the electrolyte comprising the polymer compound having a structure represented by the general formula (I) above is preferably 5 to 50% by mass, more preferably 10 to 30% by mass, the amount of the catalyst support is preferably 20 to 75% by mass, more preferably 30 to 50% by mass, and the amount of the binder is preferably 0 to 5% by mass, more preferably 0 to 3% by mass. With respect to the component that is mentioned as both an electrolyte and a binder, the amount of such a component is included in the above-mentioned amount of the electrolyte.

With respect to the solvent used in the catalyst composition, the amount of the solvent is preferably 50 to 99% by mass, more preferably 80 to 99% by mass, based on the mass of the catalyst composition (100% by mass).

As examples of the material for solid electrolyte membrane 107, there can be mentioned the polymer compound having a structure represented by the general formula (I) above, fluorine sulfonic acid polymers, such as Nafion (registered trademark; manufactured by DuPont Inc.), Aquivion (registered trademark; manufactured by Solvay S.A.), Flemion (registered trademark; manufactured by AGC Inc.), and Aciplex (registered trademark; manufactured by Asahi Kasei Corporation), hydrocarbon sulfonic acid polymers, and partially fluorine introduced-type hydrocarbon sulfonic acid polymers, and, from the viewpoint of the proton conductive properties, there can be mentioned the compound represented by the general formula (I) above.

From the viewpoint of the electrical conductivity, durability, and gas cross leak, solid electrolyte membrane 107 preferably has a thickness of 10 to 100 μm, more preferably 20 to 60 μm.

With respect to gas diffusion layer 101, there is no particular limitation, but a porous material having electrical conductivity is preferably used, and examples of such materials include paper and nonwoven fabric each made of carbon, felt, and nonwoven fabric.

<<Second embodiment of the present invention>>

The second embodiment of the present invention is a polymer compound having a structure represented by the following general formula (I):

[Chemical formula 28]

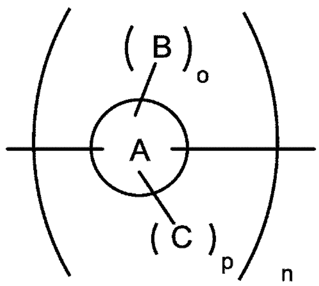

(I)

wherein n is 1 to 2, o is 1 to 3, and p is 0 to 3, wherein the relationship:

o + p ≤ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group,
which is bonded to ring A through a single heteroatom, or a heterocycle having a heteroatom therein bonded to ring A, and the heterocycle and group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

The polymer compound having a structure represented by the general formula (I) preferably has a weight average molecular weight of 8,000 to 500,000, more preferably 20,000 to 200,000, further preferably 20,000 to 120,000, as measured by the gel permeation chromatography method described in the Examples.
In the general formula (I), n is 1 to 2, preferably 2.
In the general formula (I), o is 1 to 3, and p is 0 to 3. Further, the relationship: o + p <_ 4 is satisfied, more preferably o + p = 4.
A polymer compound is a mixture of polymer compounds having a polymerization degree in the specific range, and therefore n, o, and p are an average of the polymer compounds having different polymerization degrees in such a mixture.
In the general formula (I), ring A is a benzene ring or a naphthalene ring, preferably a benzene ring.
When ring A is a benzene ring, the general formula (I) is represented by the following general formula (i):

[Chemical formula 29]

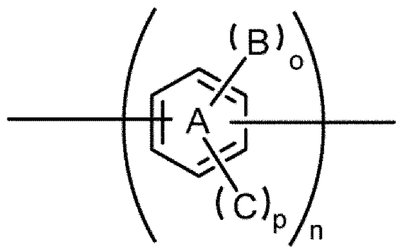

(i)

wherein carbons of ring A, B, C, n, o, and p are as defined for the general formula (I).
The weight average molecular weight of the polymer compound having a structure represented by the general formula (i) is similar to that of the polymer compound having a structure represented by the general formula (I).
In the general formulae (I) and (i), each of B and C is independently a group having at least one member selected from the group consisting of an alkyl group, an alkyl group having an ether linkage, a cycloalkyl group, and an aromatic group, which is bonded to ring A through a single heteroatom, preferably through an oxygen atom, a sulfur atom, or a nitrogen atom, more preferably through one member selected from the group consisting of -O-, -S-, and -N-, or a heterocycle having a heteroatom therein bonded to ring A. The wording "through a single heteroatom" means that the at least one member is bonded through a linker comprised of a single heteroatom, and does not include the case where the at least one member is bonded through a linker comprised of two or more heteroatoms, such as $-SO_2-$.
It is preferred that the at least one member selected from the group consisting of an alkyl group, an alkyl group having an ether linkage, a cycloalkyl group, and an aromatic group is directly bonded to a heteroatom. The expression "directly" means that, for example, an aromatic group and a heteroatom do not have a hydrocarbon chain between them.
It is preferred that each of B and C is independently a group having at least one member selected from the group consisting of a linear or branched alkyl group having 1 to 16 carbon atoms, a linear or branched alkyl group having 1 to 16 carbon atoms and having an ether linkage, a cycloalkyl group having 1 to 16 carbon atoms, a phenyl group, and a naphthyl group, which is bonded to ring A through a single heteroatom, or a heterocycle having a heteroatom therein bonded to ring A and containing one member selected from the group consisting of a benzene ring, a naphthalene ring, and an ether linkage.
The heterocycle and group of B and C optionally have a substituent. B and C may be the same or different, and at least one of B and C has an aromatic ring, and at least one aromatic ring of B and C has at least one sulfonic acid group.
The heteroatom in B and C is preferably an oxygen atom, a sulfur atom, or a nitrogen atom, more preferably a sulfur atom or a nitrogen atom, further preferably a nitrogen atom.
A preferred mode of the heteroatom in B and C, i.e., the one member selected from the group consisting of -O-, -S-, and -N- is preferably -S- or -N-, more preferably - S-.
In the case where the heterocycle or group of B and C has a substituent, when there are two or more substituents, it is preferred that each substituent is independently an alkyl group having 1 to 3 carbon atoms, a haloalkyl group having 1 to 3 carbon atoms, or an alkoxy group having 1 to 3 carbon atoms.
It is preferred that, in the general formulae (I) and (i), each of the structures represented by B and C is independently a structure represented by the following general formula (IV) or (V), wherein the ring and group contained in the general formula (IV) or (V) optionally have a substituent, and wherein at least one aromatic ring of the general formula (IV) or (V) has at least one sulfonic acid group.

[Chemical formula 30]

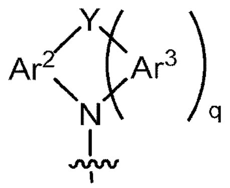

(IV)

In the general formula (IV), each of $Ar^2$ and $Ar^3$ is independently a benzene ring or a naphthalene ring, each optionally having a substituent, Y is a single bond, $-CH_2-$, or carbonyl, and q is 0 or 1, wherein when q is 0, one end of Y and one end of N (nitrogen atom) are linked to each other.

When there are two or more substituents, it is preferred that each substituent is independently an alkyl group having 1 to 3 carbon atoms, a haloalkyl group having 1 to 3 carbon atoms, or an alkoxy group having 1 to 3 carbon atoms.

[Chemical formula 31]

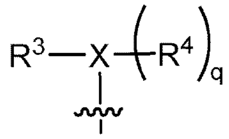

(V)

In the general formula (V), q is 0 or 1.

X is a heteroatom, and each of $R^3$ and $R^4$ is independently an alkyl group, an alkyl group having an ether linkage, a cycloalkyl group, a phenyl group, or a naphthyl group, each optionally having a substituent, preferably a linear or branched alkyl group having 1 to 16 carbon atoms, a linear or branched alkyl group having 1 to 16 carbon atoms and having an ether linkage, a cycloalkyl group having 1 to 16 carbon atoms, a phenyl group, or a naphthyl group.

$R^3$ and $R^4$ optionally together form a ring containing X.

When there are two or more substituents, it is preferred that each substituent is independently an alkyl group having 1 to 3 carbon atoms, a haloalkyl group having 1 to 3 carbon atoms, or an alkoxy group having 1 to 3 carbon atoms.

In the general formula (IV) above, Y is preferably a single bond.

In the general formula (V) above, X is preferably a sulfur atom or a nitrogen atom.

As an example of the structure represented by the general formula (IV), there can be mentioned a structure represented by the following general formula (VI) or (VII) wherein the at least one aromatic ring has at least one sulfonic acid group.

[Chemical formula 32]

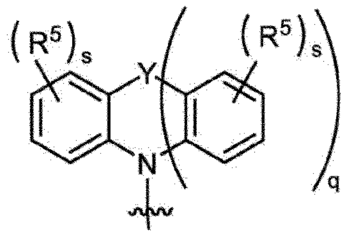

(VI)

[Chemical formula 33]

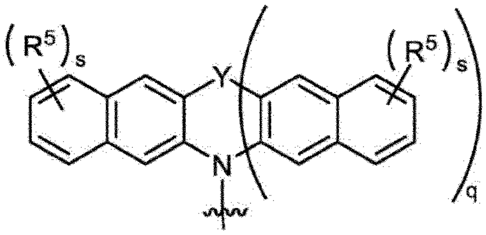

(VII)

In the general formulae (VI) and (VII), Y is a single bond, $-CH_2-$, or carbonyl, and q is 0 or 1, wherein when q is 0, one end of Y and one end of N (nitrogen atom) are linked to each other, s is an integer of 1 to 6, and each $R^5$ is independently an alkyl group having 1 to 3 carbon atoms, a haloalkyl group having 1 to 3 carbon atoms, or an alkoxy group having 1 to 3 carbon atoms. Y is preferably a single bond.

As examples of the structure represented by the general formula (V) wherein each of $R^3$ and $R^4$ is independently a phenyl group or a naphthyl group, each optionally having a substituent, there can be mentioned structures represented by the following general formulae (VIII) to (X) wherein the at least one aromatic ring has at least one sulfonic acid group. The general formula (VIII) is an example of the formula (V) wherein X is a sulfur atom and q = 0. The general formulae (IX) and (X) are an example of the formula (V) wherein X is a nitrogen atom and q = 1.

[Chemical formula 34]

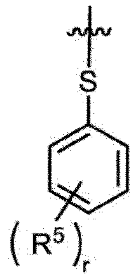

(VIII)

[Chemical formula 35]

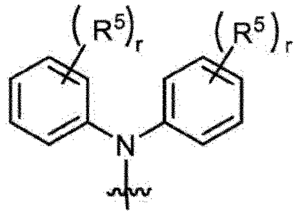

(IX)

[Chemical formula 36]

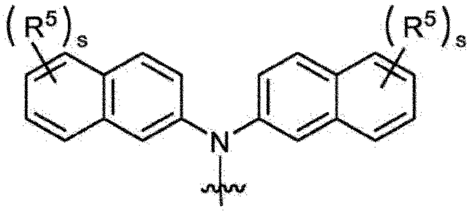

(X)

In the general formulae (VIII) to (X), r is an integer of 1 to 5, s is an integer of 1 to 6, and each $R^5$ is independently an alkyl group having 1 to 3 carbon atoms, a haloalkyl group having 1 to 3 carbon atoms, or an alkoxy group having 1 to 3 carbon atoms.

As an example of the structure represented by the general formula (V) wherein $R^3$ is a phenyl group or a naphthyl group, each optionally having a substituent, and $R^4$ is an alkyl group, an alkyl group having an ether linkage, or a cycloalkyl

group, each optionally having a substituent, there can be mentioned a structure represented by the following general formula (XI) wherein the aromatic ring has at least one sulfonic acid group.

[Chemical formula 37]

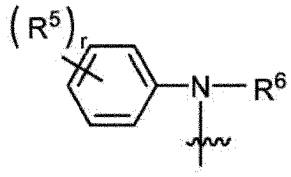

(XI)

In the general formula (XI), r is an integer of 1 to 5, each $R^5$ is independently an alkyl group having 1 to 3 carbon atoms, a haloalkyl group having 1 to 3 carbon atoms, or an alkoxy group having 1 to 3 carbon atoms, and $R^6$ is a linear or branched alkyl group having 1 to 16 carbon atoms, a linear or branched alkyl group having 1 to 16 carbon atoms and having an ether linkage, or a cycloalkyl group having 1 to 16 carbon atoms, each optionally having a substituent $R^5$.

As examples of the structure represented by the general formula (V) wherein each of $R^3$ and $R^4$ is independently an alkyl group, an alkyl group having an ether linkage, or a cycloalkyl group, each optionally having a substituent, and $R^3$ and $R^4$ optionally together form a ring containing X, there can be mentioned structures represented by the general formulae (XII) to (XIV) below. The general formula (XIV) below corresponds to the structure of the general formula (V) wherein $R^3$ and $R^4$ are an alkyl group having an ether linkage and together form a ring containing X.

[Chemical formula 38]

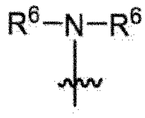

(XII)

In the general formula (XII), each $R^6$ is independently a linear or branched alkyl group having 1 to 12 carbon atoms, a linear or branched alkyl group having 1 to 12 carbon atoms and having an ether linkage, or a cycloalkyl group having 1 to 12 carbon atoms, each optionally having a substituent selected from the group consisting of an alkyl group having 1 to 3 carbon atoms, a haloalkyl group having 1 to 3 carbon atoms, and an alkoxy group having 1 to 3 carbon atoms.

[Chemical formula 39]

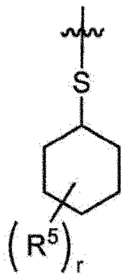

(XIII)

In the general formula (XIII), r is an integer of 1 to 5, and each $R^5$ is independently an alkyl group having 1 to 3 carbon atoms, a haloalkyl group having 1 to 3 carbon atoms, or an alkoxy group having 1 to 3 carbon atoms.

[Chemical formula 40]

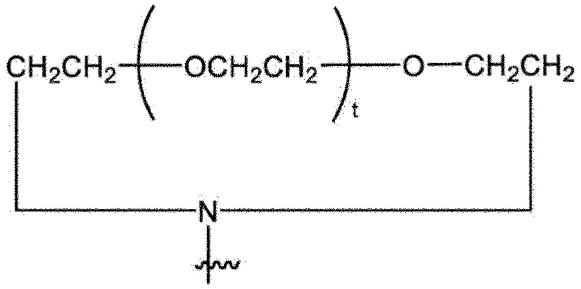

(XIV)

In the general formula (XIV), t is an integer of 1 to 6.

B and C may be the same, but are preferably different from each other.

When B and C are the same, it is preferred that B and C are the structure of the general formula (VI), (VIII), or (IX) wherein the at least one aromatic ring has at least one sulfonic acid group.

Further, even when B and C are different from each other, it is preferred that B and C are the same structure of any one of the general formulae (VI) to (XIV) wherein only a substituent other than the sulfonic acid group is different, and wherein the at least one aromatic ring has at least one sulfonic acid group.

When B and C are different from each other, it is preferred that, in the general formulae (I) and (i), p is not 0, and B is the structure represented by the general formula (IV), or the structure represented by the general formula (V) wherein $R^3$ is a phenyl group or a naphthyl group, each optionally having a substituent, $R^4$ is an alkyl group, an alkyl group having an ether linkage, a cycloalkyl group, a phenyl group, or a naphthyl group, each optionally having a substituent, and $R^3$ and $R^4$ optionally together form a ring containing X, wherein at least one aromatic ring of the B has at least one sulfonic acid group, and C is the structure represented by the general formula (V) wherein each of $R^3$ and $R^4$ is independently an alkyl group, an alkyl group having an ether linkage, or a cycloalkyl group, each optionally having a substituent, and $R^3$ and $R^4$ optionally together form a ring containing X, and it is more preferred that B is a structure selected from the group consisting of the general formulae (VI) to (XI) above wherein the at least one aromatic ring has at least one sulfonic acid group, and C is selected from the group consisting of the general formulae (XII) to (XIV) above. By virtue of such a structure, the amount of the sulfonic acid group introduced into the polymer compound having a structure represented by the general formula (I) can be controlled.

The polymer compound having a structure represented by the general formula (I) is preferably a compound represented by the general formula (II).

[Chemical formula 41]

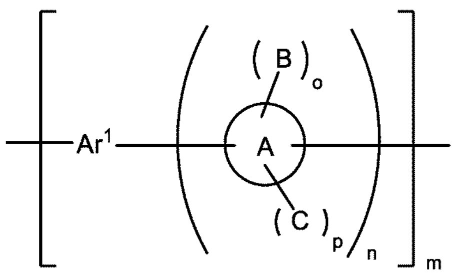

(II)

The compound represented by the general formula (II) is more preferably a compound represented by the following general formula (ii).

[Chemical formula 42]

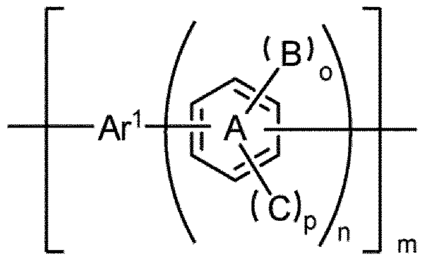

(ii)

In the general formula (II), ring A, B, C, n, o, and p are as defined for the general formula (I). In the general formula (ii), carbons of ring A, B, C, n, o, and p are as defined for the general formula (I). In the general formulae (II) and (ii), m is 3 or more, preferably 3 to 100, more preferably 15 to 60.

In the general formulae (II) and (ii), $Ar^1$ is an aromatic group having 6 to 40 carbon atoms and optionally having a substituent. The number of carbon atoms includes the number of carbon atoms of a substituent. Examples of aromatic groups include divalent groups corresponding to, for example, benzene, naphthalene, acetylene, biphenyl, indacene, biphenylene, acenaphthylene, acenaphthene, fluorene, phenalene, phenanthrene, tetralin, and anthracene. When there are two or more substituents, the substituents are independently those similar to $R^1$ and $R^2$ in the general formula (III) below.

$Ar^1$ is different from the structure represented by the general formula (I).

In the general formulae (II) and (ii), $Ar^1$ is preferably a structure represented by the following general formula (III).

[Chemical formula 43]

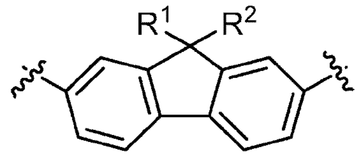

(III)

In the general formula (III), each of $R^1$ and $R^2$ is independently an alkyl group, a cycloalkyl group, or an aromatic group, each optionally having a substituent, preferably a linear or branched alkyl group having 1 to 15 carbon atoms, a cycloalkyl group having 4 to 12 carbon atoms, a phenyl group, or a naphthyl group, each optionally having a substituent, more preferably a linear or branched alkyl group having 5 to 11 carbon atoms, a cycloalkyl group having 4 to 6 carbon atoms, or a phenyl group, each optionally having a substituent, further preferably a linear or branched alkyl group having 5 to 9 carbon atoms and optionally having a substituent. $R^1$ and $R^2$ optionally together form a ring.

When there are two or more substituents, it is preferred that each substituent is independently an alkyl group having 1 to 3 carbon atoms, a haloalkyl group having 1 to 3 carbon atoms and/or an alkoxy group having 1 to 3 carbon atoms.

The polymer compound having a structure represented by the general formula (I) or (i) preferably has an ion-exchange capacity (IEC ( mmol/g)) of 0.1 to 6, more preferably 1 to 5, further preferably 1.5 to 4. The number of sulfonic acid group or groups of the polymer compound having a structure represented by the general formula (I) is preferably a number such that the ion-exchange capacity is in the above range.

In the general formulae (I) and (i), carbons of ring A, except the carbons bonded to the principal chain and the carbons to which B and C are bonded, are optionally substituted by a halogen atom. The "principal chain" means the principal chain of the polymer compound having a structure represented by the general formula (I). The halogen atom is preferably a fluorine atom.

The number of substitution of ring A with a halogen atom or atoms is preferably 0 to 5, more preferably 0 to 3, per ring A.

The method for producing the polymer compound having a structure represented by the general formula (I) or (i) is as described above in connection with the first embodiment of the present invention.

The polymer compound having a structure represented by the general formula (I) or (i) is advantageously used as an electrolyte in an anode catalyst layer and/or a cathode catalyst layer for a polymer electrolyte fuel cell. Accordingly, the polymer compound having a structure represented by the general formula (I) is advantageously contained in a catalyst layer for a polymer electrolyte fuel cell. The polymer electrolyte fuel cell is as described above in connection with the first embodiment of the present invention.

Examples

Hereinbelow, the present invention will be described in more detail with reference to the following Examples and Comparative Examples, which should not be construed as limiting the scope of the present invention.

The values shown in the Examples were measured or determined by the methods described below.

[Measurement method for a number average molecular weight (Mn) and a weight average molecular weight (Mw)]

The measured values are the results of measurement made by gel permeation chromatography (hereinafter, referred to simply as "GPC"). In the measurement, a GPC apparatus, manufactured by Tosoh Corp., was used, and conditions for the measurement and others are as follows.

GPC Column: TSKgel SuperHZM-N; TSKgel, SuperHZM-M; TSKgel, SuperHZ-L; TSKgel guard column (Tosoh Corp.)
Column temperature: 40°C
Solvent: Tetrahydrofuran (THF)
Flow rate: 0.3 ml/min
Standard sample: Polystyrene (Tosoh Corp.)

[Method for determining an ion-exchange capacity (IEC) of an electrolyte]

A dried electrolyte was immersed in a 2 M aqueous sodium chloride solution, and the solution was stirred at room temperature for several days, and then diluted with water. Then, the resultant solution was subjected to neutralization titration using a 0.02 M aqueous sodium hydroxide solution (factor f = 1.003). A weight of the electrolyte was taken as E (mg) and a volume of the 0.02 M aqueous sodium hydroxide solution required for the neutralization was taken as L (ml), and an IEC was determined from the following formula.

$$\text{IEC (mmol/g)} = (L/E) \times 0.02 \times 1.003 \times 1{,}000$$

[Method for determining a polymerization degree m]

A polymerization degree m of a polymer was determined from the following formula using a formula weight per repeating unit of the polymer and a number average molecular weight (Mn) obtained by GPC measurement.

$$\text{Polymerization degree } m = (\text{Number average molecular weight (Mn)})/(\text{Molecular weight per repeating unit})$$

[Synthesis Example 1: Synthesis of P-1]

[Chemical formula 44]

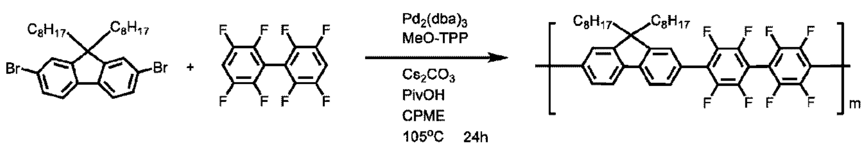


P-1

In a reaction vessel in a nitrogen gas atmosphere were placed 2.00 g of 2,7-dibromo-9,9-di-n-octylfluorene (manufactured by Sigma-Aldrich Co., LLC.), 1.09 g of 4H,4'H-octafluorobiphenyl (manufactured by Tokyo Chemical Industry Co., Ltd.), 0.034 g of tris(dibenzylideneacetone)dipalladium(0) (manufactured by Tokyo Chemical Industry Co., Ltd.), 0.051 g of tris(o-methoxyphenyl)phosphine (manufactured by Tokyo Chemical Industry Co., Ltd.), 3.56 g of cesium

carbonate (manufactured by Kanto Chemical Co., Inc.), and 28 mL of cyclopentyl methyl ether (Kanto Chemical Co., Inc.), and a solution obtained by dissolving 0.37 g of pivalic acid (manufactured by Tokyo Chemical Industry Co., Ltd.) in 0.5 mL of cyclopentyl methyl ether (manufactured by Kanto Chemical Co., Inc.) was added. The reaction mixture was heated to 105°C and stirred for 24 hours. After cooling to room temperature, the resultant reaction mixture was dropwise added to a methanol-ion-exchanged water-35% HCl mixture, followed by stirring. Filtration under a reduced pressure was conducted, and the resultant filtration residue was dried and then dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.38%, followed by stirring. Filtration under a reduced pressure was conducted and the resultant filtration residue was dried, obtaining 2.2 g of P-1 (yield: 90%).

P-1 had Mw: 104,200, Mn: 41,500, and m: 61.

[Synthesis Example 2: Synthesis of P-2]

[Chemical formula 45]

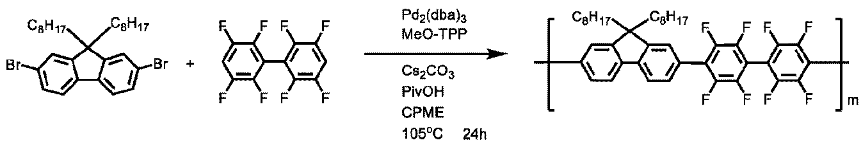


P-2

In a reaction vessel in a nitrogen gas atmosphere were placed 3.00 g of 2,7-dibromo-9,9-di-n-octylfluorene (manufactured by Sigma-Aldrich Co., LLC.), 1.63 g of 4H,4'H-octafluorobiphenyl (manufactured by Tokyo Chemical Industry Co., Ltd.), 0.050 g of tris(dibenzylideneacetone)dipalladium(0) (manufactured by Tokyo Chemical Industry Co., Ltd.), 0.077 g of tris(o-methoxyphenyl)phosphine (manufactured by Tokyo Chemical Industry Co., Ltd.), 5.35 g of cesium carbonate (manufactured by Kanto Chemical Co., Inc.), and 42 mL of cyclopentyl methyl ether (Kanto Chemical Co., Inc.), and a solution obtained by dissolving 0.56 g of pivalic acid (manufactured by Tokyo Chemical Industry Co., Ltd.) in 0.5 mL of cyclopentyl methyl ether (manufactured by Kanto Chemical Co., Inc.) was added. The reaction mixture was heated to 105°C and stirred for 24 hours. After cooling to room temperature, the resultant reaction mixture was dropwise added to a methanol-ion-exchanged water-35% HCl mixture, followed by stirring. Filtration under a reduced pressure was conducted, and the resultant filtration residue was dried and then dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.38%, followed by stirring. Filtration under a reduced pressure was conducted and the resultant filtration residue was dried, obtaining 3.5 g of P-2 (yield: 93%).

P-2 had Mw: 73,200, Mn: 31,300, and m: 46.

[Synthesis Example 3: Synthesis of P-3]

[Chemical formula 46]

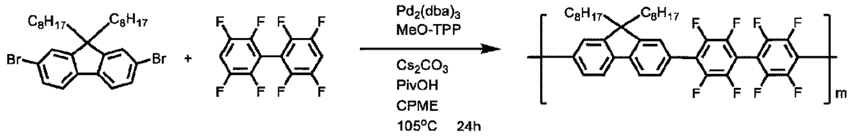


P-3

In a reaction vessel in a nitrogen gas atmosphere were placed 6.00 g of 2,7-dibromo-9,9-di-n-octylfluorene (manufactured by Sigma-Aldrich Co., LLC.), 3.26 g of 4H,4'H-octafluorobiphenyl (manufactured by Tokyo Chemical Industry Co., Ltd.), 0.10 g of tris(dibenzylideneacetone)dipalladium(0) (manufactured by Tokyo Chemical Industry Co., Ltd.), 0.15 g of tris(o-methoxyphenyl)phosphine (manufactured by Tokyo Chemical Industry Co., Ltd.), 10.7 g of cesium carbonate (manufactured by Kanto Chemical Co., Inc.), and 82.5 mL of cyclopentyl methyl ether (Kanto Chemical Co.,

Inc.), and a solution obtained by dissolving 1.12 g of pivalic acid (manufactured by Tokyo Chemical Industry Co., Ltd.) in 1.5 mL of cyclopentyl methyl ether (manufactured by Kanto Chemical Co., Inc.) was added. The reaction mixture was heated to 105°C and stirred for 24 hours. After cooling to room temperature, the resultant reaction mixture was dropwise added to a methanol-ion-exchanged water-35% HCl mixture, followed by stirring. Filtration under a reduced pressure was conducted, and the resultant filtration residue was dried and then dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.32%, followed by stirring. Filtration under a reduced pressure was conducted and the resultant filtration residue was dried, and then further dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.10%, followed by stirring. Filtration under a reduced pressure was conducted and the resultant filtration residue was dried, obtaining 6.6 g of P-3 (yield: 88%).

P-3 had Mw: 95,300, Mn: 38,900, and m: 57.

[Synthesis Example 4: Synthesis of P-4]

[Chemical formula 47]

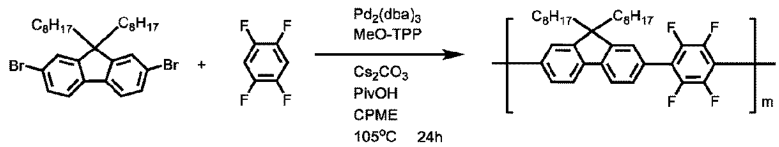


P-4

In a reaction vessel in a nitrogen gas atmosphere were placed 3.00 g of 2,7-dibromo-9,9-di-n-octylfluorene (manufactured by Sigma-Aldrich Co., LLC.), a solution obtained by dissolving 0.83 g of 1,2,4,5-tetrafluorobenzene (manufactured by Tokyo Chemical Industry Co., Ltd.) in 0.5 ml of cyclopentyl methyl ether (manufactured by Kanto Chemical Co., Inc.), 0.050 g of tris(dibenzylideneacetone)dipalladium(0) (manufactured by Tokyo Chemical Industry Co., Ltd.), 0.078 g of tris(o-methoxyphenyl)phosphine (manufactured by Tokyo Chemical Industry Co., Ltd.), 5.35 g of cesium carbonate (manufactured by Kanto Chemical Co., Inc.), and 42 mL of cyclopentyl methyl ether (Kanto Chemical Co., Inc.), and a solution obtained by dissolving 0.56 g of pivalic acid (manufactured by Tokyo Chemical Industry Co., Ltd.) in 0.5 mL of cyclopentyl methyl ether (manufactured by Kanto Chemical Co., Inc.) was added. The reaction mixture was heated to 105°C and stirred for 24 hours. After cooling to room temperature, the resultant reaction mixture was dropwise added to a methanol-ion-exchanged water-35% HCl mixture, followed by stirring. Filtration under a reduced pressure was conducted, and the resultant filtration residue was dried and then dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.38%, followed by stirring. Filtration under a reduced pressure was conducted and the resultant filtration residue was dried, obtaining 2.4 g of P-4 (yield: 81%).

P-4 had Mw: 265,800, Mn: 83,600, and m: 156.

[Synthesis Example 5: Synthesis of P-5]

[Chemical formula 48]

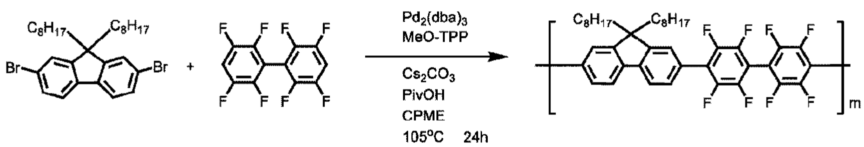


P-5

In a reaction vessel in a nitrogen gas atmosphere were placed 3.00 g of 2,7-dibromo-9,9-di-n-octylfluorene (manufactured by Sigma-Aldrich Co., LLC.), 1.81 g of 4H,4'H-octafluorobiphenyl (manufactured by Tokyo Chemical

Industry Co., Ltd.), 0.0560 g of tris(dibenzylideneacetone)dipalladium(0) (manufactured by Tokyo Chemical Industry Co., Ltd.), 0.0856 g of tris(o-methoxyphenyl)phosphine (manufactured by Tokyo Chemical Industry Co., Ltd.), 5.94 g of cesium carbonate (manufactured by Kanto Chemical Co., Inc.), and 32 mL of cyclopentyl methyl ether (Kanto Chemical Co., Inc.), and a solution obtained by dissolving 0.623 g of pivalic acid (manufactured by Tokyo Chemical Industry Co., Ltd.) in 10 mL of cyclopentyl methyl ether (manufactured by Kanto Chemical Co., Inc.) was added. The reaction mixture was heated to 105°C and stirred for 24 hours. After cooling to room temperature, the resultant reaction mixture was dropwise added to a methanol-ion-exchanged water-35% HCl mixture, followed by stirring. Filtration under a reduced pressure was conducted, and the resultant filtration residue was dried and then dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.38%, followed by stirring. Filtration under a reduced pressure was conducted and the resultant filtration residue was dried, obtaining 3.3 g of P-5 (yield: 78%).

P-5 had Mw: 27,300, Mn: 12,400, and m: 18.

[Synthesis Example 6: Synthesis of P-6]

[Chemical formula 49]

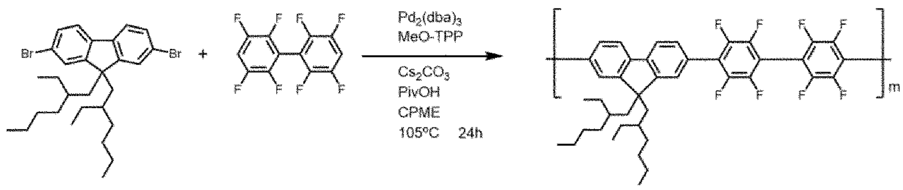


P-6

In a reaction vessel in a nitrogen gas atmosphere were placed 2.00 g of 2,7-dibromo-9,9-bis(2-ethylhexyl) fluorene (manufactured by Tokyo Chemical Industry Co., Ltd.), 1.09 g of 4H,4'H-octafluorobiphenyl (manufactured by Tokyo Chemical Industry Co., Ltd.), 0.0336 g of tris(dibenzylideneacetone)dipalladium(0) (manufactured by Tokyo Chemical Industry Co., Ltd.), 0.0514 g of tris(o-methoxyphenyl)phosphine (manufactured by Tokyo Chemical Industry Co., Ltd.), 3.57 g of cesium carbonate (manufactured by Kanto Chemical Co., Inc.), and 28 mL of cyclopentyl methyl ether (Kanto Chemical Co., Inc.), and a solution obtained by dissolving 0.373 g of pivalic acid (manufactured by Tokyo Chemical Industry Co., Ltd.) in 0.5 mL of cyclopentyl methyl ether (manufactured by Kanto Chemical Co., Inc.) was added. The reaction mixture was heated to 105°C and stirred for 24 hours. After cooling to room temperature, the resultant reaction mixture was dropwise added to a methanol-ion-exchanged water-35% HCl mixture, followed by stirring. Filtration under a reduced pressure was conducted, and the resultant filtration residue was dried and then dissolved in tetrahydrofuran, and the resultant solution was dropwise added to a solution obtained by dissolving sodium N,N-diethyldithiocarbamate trihydrate (Kanto Chemical Co., Inc.) in methanol so as to have a concentration of 0.38%, followed by stirring. Filtration under a reduced pressure was conducted and the resultant filtration residue was dried, obtaining 1.3 g of P-6 (yield: 53%).

P-6 had Mw: 9,000, Mn: 6,000, and m: 8.8.

[Example 1]

(1) Synthesis of P-1-1

[Chemical formula 50]

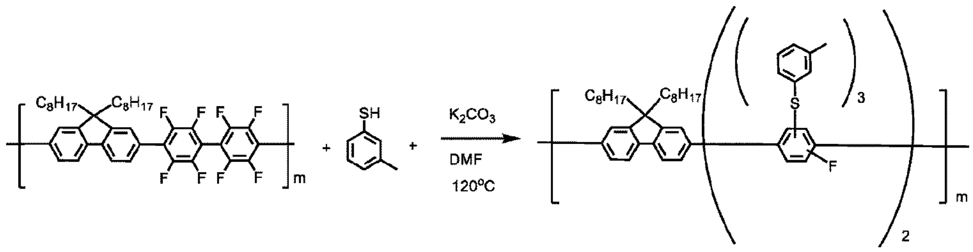


P-1-1

0.30 g of P-1 and 12 ml of N,N-dimethylformamide (DMF) (manufactured by Junsei Chemical Co., Ltd.) were placed in a reaction vessel, and 1.2 g of potassium carbonate (manufactured by Junsei Chemical Co., Ltd.) and 1.1 g of m-toluenethiol (manufactured by Tokyo Chemical Industry Co., Ltd.) were added. The reaction mixture was heated to 120°C and stirred for 24 hours. The resultant reaction mixture was dropwise added to ion-exchanged water, followed by stirring. Filtration under a reduced pressure was conducted, and the cake was washed with methanol, and then the resultant filtration residue was dried, and then dissolved in chloroform and the resultant solution was dropwise added to methanol, followed by stirring. Filtration under a reduced pressure was conducted and the resultant filtration residue was dried, obtaining 0.49 g of P-1-1 (yield: 73%).

(2) Synthesis of electrolyte 1

0.25 g of P-1-1 and 13 mL of methylene chloride (manufactured by Kanto Chemical Co., Inc.) were placed in a reaction vessel, and 0.34 g of trimethylsilyl chlorosulfonate (manufactured by Sigma-Aldrich Co., LLC.) was added. The reaction mixture was stirred at room temperature for 24 hours, and then ethanol was added to the mixture to terminate the reaction. The resultant reaction mixture was dropwise added to diethyl ether, followed by stirring. Then, the deposited solids were washed with hexane, and the resultant filtration residue was dried, obtaining 0.30 g of electrolyte 1 having a sulfonic acid group introduced into P-1-1.

IEC measurement was conducted for checking the sulfonic acid group amount of the obtained electrolyte 1. As a result, the IEC was found to be 3.62 mmol/g.

[Example 2]

(1) Synthesis of P-2-1

[Chemical formula 51]

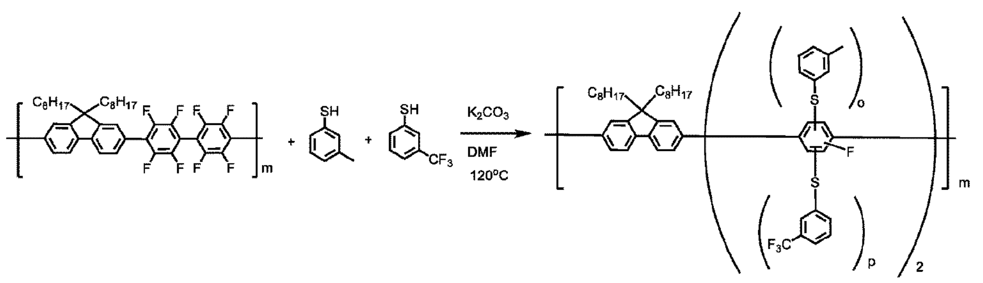


P-2-1

0.30 g of P-2 and 12 ml of N,N-dimethylformamide (DMF) (manufactured by Junsei Chemical Co., Ltd.) were placed in a reaction vessel, and 1.2 g of potassium carbonate (manufactured by Junsei Chemical Co., Ltd.), 0.55 g of m-toluenethiol (manufactured by Tokyo Chemical Industry Co., Ltd.), and 0.78 g of 3-(trifluoromethyl)benzenethiol (manufactured by Tokyo Chemical Industry Co., Ltd.) were added. The reaction mixture was heated to 120°C and stirred for 24 hours. The resultant reaction mixture was dropwise added to ion-exchanged water, followed by stirring. Filtration under a

reduced pressure was conducted, and the cake was washed with methanol, and then the resultant filtration residue was dried, and then dissolved in chloroform and the resultant solution was dropwise added to methanol, followed by stirring. Filtration under a reduced pressure was conducted and the resultant filtration residue was dried, obtaining 0.42 g of P-2-1 (yield: 59%). The NMR measurement showed that: o = 2.37, and p = 0.63.

(2) Synthesis of electrolyte 2

0.25 g of P-2-1 and 13 mL of methylene chloride (manufactured by Kanto Chemical Co., Inc.) were placed in a reaction vessel, and 0.30 g of trimethylsilyl chlorosulfonate (manufactured by Sigma-Aldrich Co., LLC.) was added. The reaction mixture was stirred at room temperature for 24 hours, and then ethanol was added to the mixture to terminate the reaction. The resultant reaction mixture was dropwise added to diethyl ether and stirred, and then subjected to filtration under a reduced pressure and the resultant filtration residue was dried, obtaining 0.093 g of electrolyte 2 having a sulfonic acid group introduced into P-2-1.

IEC measurement was conducted for checking the sulfonic acid group amount of the obtained electrolyte 2. As a result, the IEC was found to be 2.94 mmol/g.

[Example 3]

(1) Synthesis of P-2-2

[Chemical formula 52]

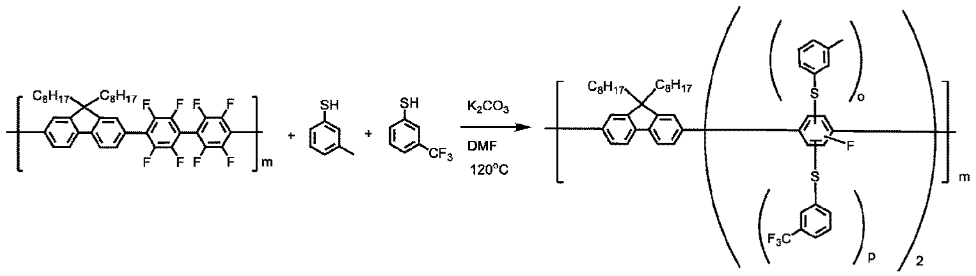


P-2-2

0.30 g of P-2 and 12 ml of N,N-dimethylformamide (DMF) (manufactured by Junsei Chemical Co., Ltd.) were placed in a reaction vessel, and 0.61 g of potassium carbonate (manufactured by Junsei Chemical Co., Ltd.), 0.16 g of m-toluenethiol (manufactured by Tokyo Chemical Industry Co., Ltd.), and 0.55 g of 3-(trifluoromethyl)benzenethiol (manufactured by Tokyo Chemical Industry Co., Ltd.) were added. The reaction mixture was heated to 120°C and stirred for 24 hours. The resultant reaction mixture was dropwise added to ion-exchanged water, followed by stirring. Filtration under a reduced pressure was conducted, and the cake was washed with methanol, and then the resultant filtration residue was dried, and then dissolved in chloroform and the resultant solution was dropwise added to methanol, followed by stirring. Filtration under a reduced pressure was conducted and the resultant filtration residue was dried, obtaining 0.46 g of P-2-2 (yield: 58%). The NMR measurement showed that: o = 1.176, and p = 1.824.

(2) Synthesis of electrolyte 3

0.25 g of P-2-2 and 13 mL of methylene chloride (manufactured by Kanto Chemical Co., Inc.) were placed in a reaction vessel, and 0.27 g of trimethylsilyl chlorosulfonate (manufactured by Sigma-Aldrich Co., LLC.) was added. The reaction mixture was stirred at room temperature for 24 hours, and then ethanol was added to the mixture to terminate the reaction. The resultant reaction mixture was dropwise added to hexane and stirred, and then subjected to filtration under a reduced pressure and the resultant filtration residue was dried, obtaining 0.30 g of electrolyte 3 having a sulfonic acid group introduced into P-2-2.

IEC measurement was conducted for checking the sulfonic acid group amount of the obtained electrolyte 3. As a result, the IEC was found to be 1.79 mmol/g.

[Example 4]

(1) Synthesis of P-2-3

[Chemical formula 53]

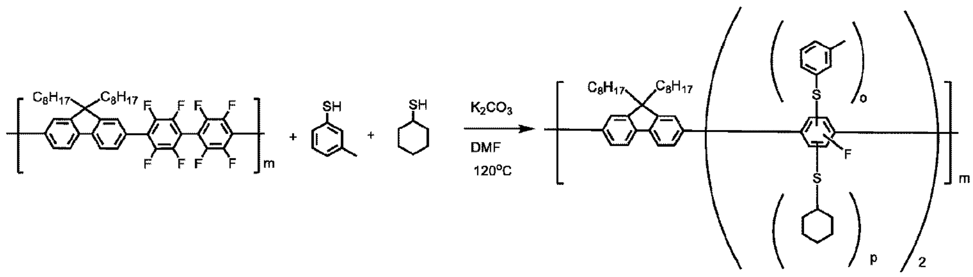


P-2-3

0.30 g of P-2 and 12 ml of N,N-dimethylformamide (DMF) (manufactured by Junsei Chemical Co., Ltd.) were placed in a reaction vessel, and 1.21 g of potassium carbonate (manufactured by Junsei Chemical Co., Ltd.), 0.27 g of m-toluenethiol (manufactured by Tokyo Chemical Industry Co., Ltd.), and 0.26 g of cyclohexanethiol (manufactured by Tokyo Chemical Industry Co., Ltd.) were added. The reaction mixture was heated to 120°C and stirred for 24 hours. The resultant reaction mixture was dropwise added to ion-exchanged water, followed by stirring. Filtration under a reduced pressure was conducted, and the cake was washed with methanol, and then the resultant filtration residue was dried, and then dissolved in chloroform and the resultant solution was dropwise added to methanol, followed by stirring. Filtration under a reduced pressure was conducted and the resultant filtration residue was dried, obtaining 0.41 g of P-2-3 (yield: 63%). The NMR measurement showed that: o = 1.35, and p = 1.65.

(2) Synthesis of electrolyte 4

0.30 g of P-2-3 and 15 mL of methylene chloride (manufactured by Kanto Chemical Co., Inc.) were placed in a reaction vessel, and 0.38 g of trimethylsilyl chlorosulfonate (manufactured by Sigma-Aldrich Co., LLC.) was added. The reaction mixture was stirred at room temperature for 24 hours, and then ethanol was added to the mixture to terminate the reaction. The resultant reaction mixture was dropwise added to hexane and stirred, and then subjected to filtration under a reduced pressure and the resultant filtration residue was dried, obtaining 0.39 g of electrolyte 4 having a sulfonic acid group introduced into P-2-3.

IEC measurement was conducted for checking the sulfonic acid group amount of the obtained electrolyte 4. As a result, the IEC was found to be 2.47 mmol/g.

[Example 5]

(1) Synthesis of P-3-1

[Chemical formula 54]

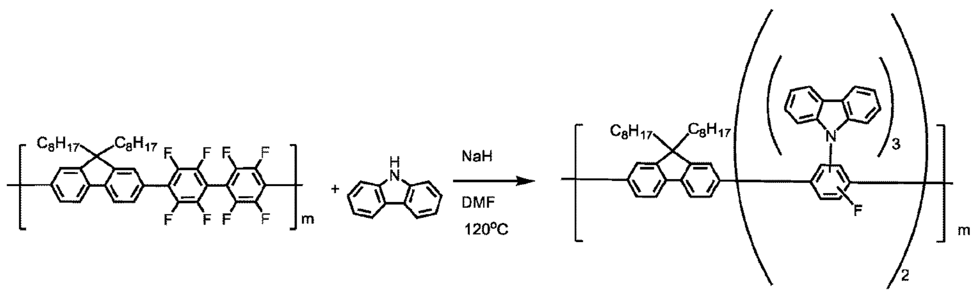


P-3-1

0.30 g of P-3 and 12 ml of N,N-dimethylformamide (DMF) (manufactured by Junsei Chemical Co., Ltd.) were placed in a reaction vessel, and 1.5 g of carbazole (manufactured by Wako Pure Chemical Industries, Ltd.) and 0.38 g of sodium hydride (Kanto Chemical Co., Inc.) were added. The reaction mixture was heated to 120°C and stirred for 24 hours. The resultant reaction mixture was dropwise added to ion-exchanged water, followed by stirring. Filtration under a reduced pressure was conducted, and the cake was washed with methanol, and then the resultant filtration residue was dried, and then dissolved in chloroform and the resultant solution was dropwise added to methanol, followed by stirring. Filtration under a reduced pressure was conducted and the resultant filtration residue was dried, obtaining 0.61 g of P-3-1 (yield: 74%).

(2) Synthesis of electrolyte 5

0.25 g of P-3-1 and 13 mL of methylene chloride (manufactured by Kanto Chemical Co., Inc.) were placed in a reaction vessel, and 0.16 g of trimethylsilyl chlorosulfonate (manufactured by Sigma-Aldrich Co., LLC.) was added. The reaction mixture was stirred at room temperature for 24 hours, and then ethanol was added to the mixture to terminate the reaction. The resultant reaction mixture was dropwise added to diethyl ether and stirred, and then subjected to filtration under a reduced pressure and the resultant filtration residue was dried, obtaining 0.29 g of electrolyte 5 having a sulfonic acid group introduced into P-3-1.

IEC measurement was conducted for checking the sulfonic acid group amount of the obtained electrolyte 5. As a result, the IEC was found to be 2.40 mmol/g.

[Example 6]

(1) Synthesis of P-4-1

[Chemical formula 55]

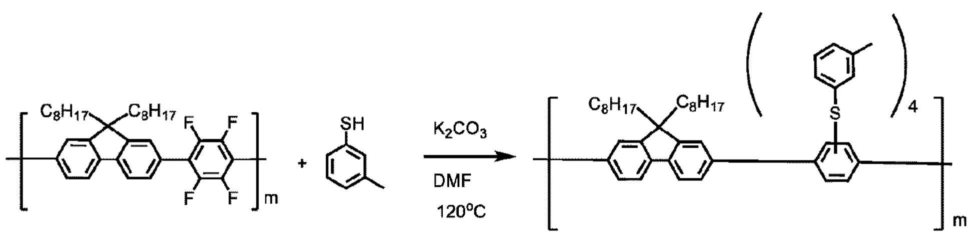


P-4-1

0.30 g of P-4 and 12 ml of N,N-dimethylformamide (DMF) (manufactured by Junsei Chemical Co., Ltd.) were placed in a reaction vessel, and 0.78 g of potassium carbonate (manufactured by Junsei Chemical Co., Ltd.) and 0.69 g of m-toluenethiol (manufactured by Tokyo Chemical Industry Co., Ltd.) were added. The reaction mixture was heated to 120°C and stirred for 24 hours. The resultant reaction mixture was dropwise added to ion-exchanged water, followed by stirring. Filtration under a reduced pressure was conducted, and the cake was washed with methanol, and then the

resultant filtration residue was dried, and then dissolved in chloroform and the resultant solution was dropwise added to methanol, followed by stirring. Filtration under a reduced pressure was conducted, and the resultant filtration residue was dried. The dried residue was further dissolved in chloroform, and the resultant solution was dropwise added to methanol, followed by stirring. Filtration under a reduced pressure was conducted and the resultant filtration residue was dried, obtaining 0.48 g of P-4-1 (yield: 90%).

(2) Synthesis of electrolyte 6

0.25 g of P-4-1 and 13 mL of methylene chloride (manufactured by Kanto Chemical Co., Inc.) were placed in a reaction vessel, and 0.25 g of trimethylsilyl chlorosulfonate (manufactured by Sigma-Aldrich Co., LLC.) was added. The reaction mixture was stirred at room temperature for 24 hours, and then ethanol was added to the mixture to terminate the reaction. The resultant reaction mixture was dropwise added to diethyl ether and stirred, and then subjected to filtration under a reduced pressure and the resultant filtration residue was dried, obtaining 0.21 g of electrolyte 6 having a sulfonic acid group introduced into P-4-1.

IEC measurement was conducted for checking the sulfonic acid group amount of the obtained electrolyte 6. As a result, the IEC was found to be 3.34 mmol/g.

[Example 7]

(1) Synthesis of P-5-1

[Chemical formula 56]

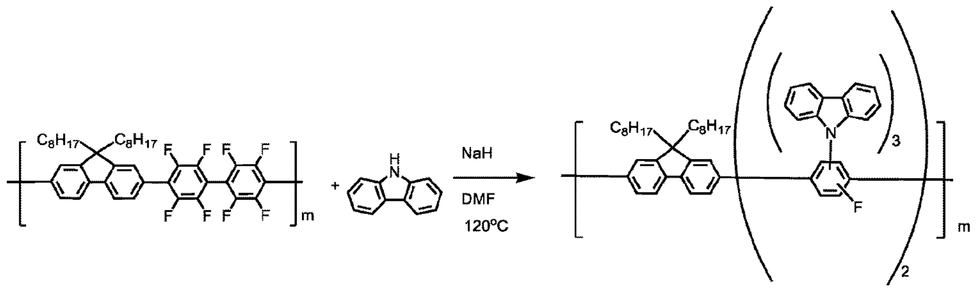


P-5-1

1.5 g of P-5 and 60 ml of N,N-dimethylformamide (DMF) (manufactured by Junsei Chemical Co., Ltd.) were placed in a reaction vessel, and 2.57 g of carbazole (manufactured by Tokyo Chemical Industry Co., Ltd.) and 0.67 g of sodium hydride (Kanto Chemical Co., Inc.) were added. The reaction mixture was heated to 120°C and stirred for 24 hours. The resultant reaction mixture was dropwise added to ion-exchanged water, followed by stirring. Filtration under a reduced pressure was conducted, and the cake was washed with methanol, and then the resultant filtration residue was dried, and then dissolved in chloroform and the resultant solution was dropwise added to methanol, followed by stirring. Filtration under a reduced pressure was conducted and the resultant filtration residue was dried, obtaining 2.8 g of P-5-1 (yield: 83%).

(2) Synthesis of electrolyte 7

0.75 g of P-5-1 and 22.5 mL of methylene chloride (manufactured by Kanto Chemical Co., Inc.) were placed in a reaction vessel, and 0.46 g of trimethylsilyl chlorosulfonate (manufactured by Sigma-Aldrich Co., LLC.) was added. The reaction mixture was stirred at room temperature for 20 hours, and then ethanol was added to the mixture to terminate the reaction. The resultant reaction mixture was dropwise added to tert-butyl methyl ether and stirred, and then subjected to filtration under a reduced pressure and the resultant filtration residue was dried, obtaining 0.64 g of electrolyte 7 having a sulfonic acid group introduced into P-5-1.

IEC measurement was conducted for checking the sulfonic acid group amount of the obtained electrolyte 7. As a result, the IEC was found to be 1.96 mmol/g.

[Example 8]

(1) Synthesis of P-6-1

[Chemical formula 57]

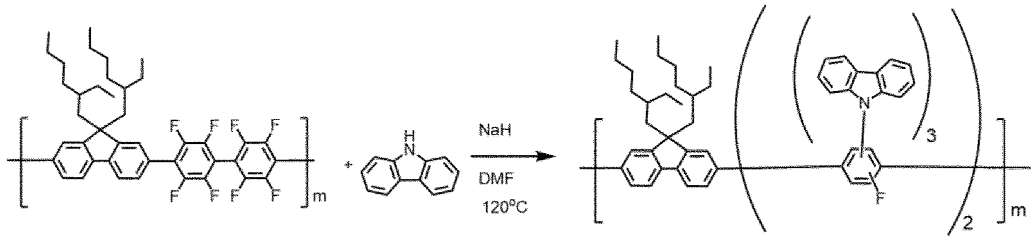


P-6-1

0.9 g of P-6 and 36 ml of N,N-dimethylformamide (DMF) (manufactured by Junsei Chemical Co., Ltd.) were placed in a reaction vessel, and 1.54 g of carbazole (manufactured by Tokyo Chemical Industry Co., Ltd.) and 0.40 g of sodium hydride (Kanto Chemical Co., Inc.) were added. The reaction mixture was heated to 120°C and stirred for 24 hours. The resultant reaction mixture was dropwise added to ion-exchanged water, followed by stirring. Filtration under a reduced pressure was conducted, and the cake was washed with methanol, and then the resultant filtration residue was dried, and then dissolved in chloroform and the resultant solution was dropwise added to methanol, followed by stirring. Filtration under a reduced pressure was conducted and the resultant filtration residue was dried, obtaining 1.7 g of P-6-1 (yield: 84%).

(2) Synthesis of electrolyte 8

1.0 g of P-6-1 and 30 mL of methylene chloride (manufactured by Kanto Chemical Co., Inc.) were placed in a reaction vessel, and 0.62 g of trimethylsilyl chlorosulfonate (manufactured by Sigma-Aldrich Co., LLC.) was added. The reaction mixture was stirred at room temperature for 24 hours, and then ethanol was added to the mixture to terminate the reaction. The resultant reaction mixture was dropwise added to tert-butyl methyl ether and stirred, and then subjected to filtration under a reduced pressure and the resultant filtration residue was dried, obtaining 1.1 g of electrolyte 8 having a sulfonic acid group introduced into P-6-1.

IEC measurement was conducted for checking the sulfonic acid group amount of the obtained electrolyte 8. As a result, the IEC was found to be 2.49 mmol/g.

[Preparation of a catalyst ink]

A platinum-supported carbon catalyst (TEC10E50E, manufactured by Tanaka Kikinzoku Kogyo K.K.), ion-exchanged water, 1-propanol, and a 5% water/1-propanol (1 part by mass/1 part by mass) solution of the electrolyte synthesized in Examples 1 to 5, 7, and 8 were placed in a glass vessel so that I/C = 0.5, the solids concentration became 3%, and ion-exchanged water/1-propanol = 1 part by mass/1 part by mass, and irradiated with ultrasonic waves by means of a homogenizer for 20 minutes, preparing a catalyst ink. In Example 6, a catalyst ink was prepared in substantially the same manner as mentioned above except that, instead of the 5% water/1-propanol (1 part by mass/1 part by mass) solution of the electrolyte, a 1.5% water/1-propanol (1 part by mass/1 part by mass) solution of the electrolyte synthesized in Example 6 was used. In Comparative Example 1, a catalyst ink was prepared in substantially the same manner as mentioned above except that, instead of the 5% water/1-propanol (1 part by mass/1 part by mass) solution of the electrolyte, a 5% Nafion dispersion (DE520 CS type, manufactured by Wako Pure Chemical Industries, Ltd.) was used. I/C is a mass ratio of the electrolyte to carbon.

[Preparation of a gas diffusion electrode]

A gas diffusion layer having a microporous layer (SIGRACET GDL28BC, manufactured by SGL Carbon Japan Co., Ltd.) was placed on a hotplate at 80°C, and a catalyst ink prepared by the above-mentioned method was applied to the microporous layer side by a spraying method, preparing a gas diffusion electrode having a catalyst layer formed on the microporous layer. The amount of the platinum catalyst per unit area is shown in Table 1.

[Preparation of a membrane electrode assembly]

An electrolyte membrane (Nafion NR212; thickness: 50 μm; manufactured by The Chemours Company) was disposed between a pair of the above-prepared gas diffusion electrodes, and subjected to hot pressing under conditions at 0.47 kN and at 140°C for 10 minutes, preparing a membrane electrode assembly.

[Evaluation of electricity generation]

The above-obtained membrane electrode assembly was covered in a pair of gaskets, except the electrode part, and a separator which also serves as a gas flow path, a current collector, an insulating sheet, and a clamp plate were disposed on both sides of the assembly, producing a polymer electrolyte fuel cell. The produced fuel cell was used as a unit cell, and air was fed to one side of the cell as an oxygen electrode and hydrogen was fed to another side as a fuel electrode to generate electricity. Conditions for electricity generation were such that the cell temperature was 80°C, and the relative humidity on the air side and the relative humidity on the fuel side were those shown in Table 1, and each gas was fed so that the fuel utilization and oxygen utilization became 5%, and evaluation of electricity generation performance (output voltage) was conducted. The output voltage at 1.0 A/cm$^2$ is shown in Table 1.

As can be seen from Table 1, in Examples 1 to 8, the output voltage at a current density of 1.0 A/cm$^2$ is higher than that in Comparative Example 1, which has shown that the electricity generation performance in Examples 1 to 8 is more excellent than that in Comparative Example 1 which uses a conventional fluorine ionomer. It is presumed that, in the present invention, by using the polymer compound having a bulky structure introduced into the side chain thereof, the catalyst layer was improved in the gas diffusion properties, so that the fuel cell exhibited excellent electricity generation properties.

[Table 1]

| Example | Electrolyte | Voltage / V | I/C | Pt / mg/cm2 | Relative humidity (80°C) |
|---|---|---|---|---|---|
| Example 1 | Electrolyte 1 | 0.283 | 0.5 | 0.1 | 50%RH |
| Example 2 | Electrolyte 2 | 0.249 | 0.5 | 0.1 | 50%RH |
| Example 3 | Electrolyte 3 | 0.051 | 0.5 | 0.1 | 50%RH |
| Example 4 | Electrolyte 4 | 0.2 | 0.5 | 0.1 | 50%RH |
| Example 5 | Electrolyte 5 | 0.335 | 0.5 | 0.1 | 50%RH |
| Example 6 | Electrolyte 6 | 0.22 | 0.5 | 0.1 | 50%RH |
| Example 7 | Electrolyte 7 | 0.338 | 0.5 | 0.1 | 50%RH |
| Example 8 | Electrolyte 8 | 0.304 | 0.5 | 0.1 | 50%RH |
| Comparative Example 1 | Nation | 0.016 | 0.5 | 0.1 | 50%RH |

Description of Reference Numerals

100: Polymer electrolyte fuel cell
101: Gas diffusion layer
103: Anode catalyst layer
105: Cathode catalyst layer
107: Solid electrolyte membrane
109: Separator

The present application claims a priority based on Japanese Patent Application Nos. 2022-058315 and 2022-126985. The whole of the disclosure of Japanese Patent Application Nos. 2022-058315 and 2022-126985 is hereby incorporated herein by reference.

INDUSTRIAL APPLICABILITY

The catalyst composition of the first embodiment of the present invention and the compound of the second

embodiment exhibit excellent electricity generation properties, and therefore are advantageously used in a catalyst layer for a polymer electrolyte fuel cell.

## Claims

1. A catalyst composition comprising a polymer compound having a structure represented by the following general formula (I), a catalyst, and a catalyst support:

[Chemical formula 58]

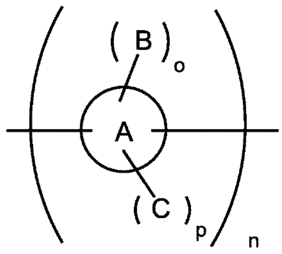

(I)

wherein n is 1 to 2, o is 1 to 3, and p is 0 to 3, wherein the relationship: $o + p \leq 4$ is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group, which is bonded to ring A through a single heteroatom, or a heterocycle having a heteroatom therein bonded to ring A, and the heterocycle and group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

2. The catalyst composition according to claim 1, wherein the polymer compound having a structure represented by the general formula (I) above is a compound represented by the general formula (II):

[Chemical formula 59]

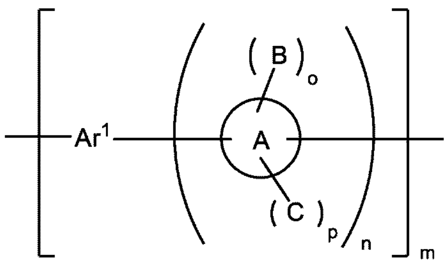

(II)

wherein $Ar^1$ is an aromatic group having 6 to 40 carbon atoms and optionally having a substituent, m is 3 or more, and ring A, B, C, n, o, and p are as defined for the general formula (I).

3. The catalyst composition according to claim 2, wherein, in the general formula (II), $Ar^1$ is a structure represented by the following general formula (III):

[Chemical formula 60]

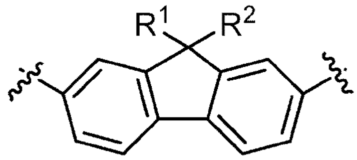

(III)

wherein each of $R^1$ and $R^2$ is independently an alkyl group, a cycloalkyl group, or an aromatic group, each optionally having a substituent, and $R^1$ and $R^2$ optionally together form a ring.

**4.** The catalyst composition according to any one of claims 1 to 3, wherein, in the general formula (I), each of the structures represented by B and C is independently a structure represented by the following general formula (IV) or (V), wherein the ring and group contained in the general formula (IV) or (V) optionally have a substituent, and wherein at least one aromatic ring of the general formula (IV) or (V) has at least one sulfonic acid group:

[Chemical formula 61]

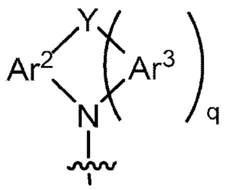

(IV)

wherein each of $Ar^2$ and $Ar^3$ is independently a benzene ring or a naphthalene ring, each optionally having a substituent, Y is a single bond, $-CH_2-$, or carbonyl, and q is 0 or 1, wherein when q is 0, one end of Y and one end of N are linked to each other,

[Chemical formula 62]

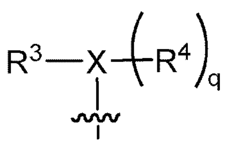

(V)

wherein q is 0 or 1, X is a heteroatom, and each of $R^3$ and $R^4$ is independently an alkyl group, an alkyl group having an ether linkage, a cycloalkyl group, a phenyl group, or a naphthyl group, each optionally having a substituent, and $R^3$ and $R^4$ optionally together form a ring containing X.

**5.** The catalyst composition according to any one of claims 1 to 3, wherein, in the general formula (I), when the heterocycle or group of B and C has a substituent, the substituent is independently an alkyl group having 1 to 3 carbon atoms, a haloalkyl group having 1 to 3 carbon atoms, or an alkoxy group having 1 to 3 carbon atoms.

**6.** The catalyst composition according to claim 1, wherein, in the general formula (I), the heteroatom is a sulfur atom or a nitrogen atom.

**7.** The catalyst composition according to claim 4, wherein the B in the general formula (I) is the structure represented by the general formula (IV), or the structure represented by the general formula (V) wherein $R^3$ is a phenyl group or a naphthyl group, each optionally having a substituent, $R^4$ is an alkyl group, an alkyl group having an ether linkage, a cycloalkyl group, a phenyl group, or a naphthyl group, each optionally having a substituent, and $R^3$ and $R^4$ optionally together form a ring containing X, wherein at least one aromatic ring of the B has at least one sulfonic acid group, and wherein, in the general formula (I), p is not 0, and the C in the general formula (I) is the structure represented by the general formula (V) wherein each of $R^3$ and $R^4$ is independently an alkyl group, an alkyl group having an ether linkage, or a cycloalkyl group, each optionally having a substituent, and $R^3$ and $R^4$ optionally together form a ring containing X.

**8.** The catalyst composition according to claim 1 or 2, which is for use in a polymer electrolyte fuel cell.

**9.** A catalyst layer for a polymer electrolyte fuel cell, comprising the catalyst composition according to claim 8.

**10.** A membrane electrode assembly having a solid electrolyte membrane, a gas diffusion layer, and the catalyst layer according to claim 9.

**11.** A polymer electrolyte fuel cell having the membrane electrode assembly according to claim 10.

**12.** A polymer compound having a structure represented by the following general formula (I):

[Chemical formula 63]

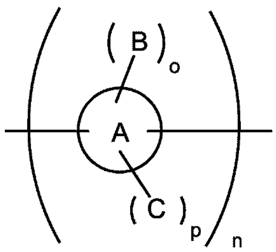

(I)

wherein n is 1 to 2, o is 1 to 3, and p is 0 to 3, wherein the relationship:

o + p $\leq$ 4 is satisfied,
ring A is a benzene ring or a naphthalene ring, and
each of B and C is independently a group having at least one member selected from the group consisting of an alkyl group, an alkyl group having an ether linkage, a cycloalkyl group, and an aromatic group, which is bonded to ring A through a single heteroatom, or a heterocycle having a heteroatom therein bonded to ring A, and the heterocycle and group of B and C optionally have a substituent,
wherein B and C are the same or different, at least one of B and C has an aromatic ring, and at least one aromatic ring of B and C has at least one sulfonic acid group, and
wherein carbons of ring A, except the carbons bonded to the principal chain and the carbons to which B and C are bonded, are optionally substituted by a halogen atom.

**13.** The polymer compound according to claim 12, wherein the polymer compound having a structure represented by the general formula (I) above is a compound represented by the general formula (II):

[Chemical formula 64]

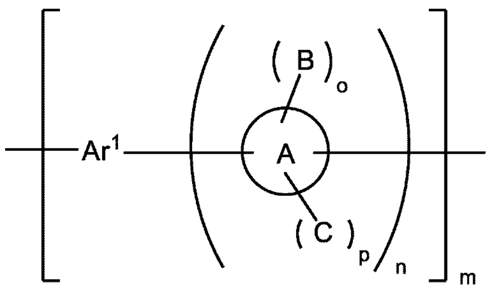

(II)

wherein $Ar^1$ is an aromatic group having 6 to 40 carbon atoms and optionally having a substituent, m is 3 or more, and ring A, B, C, n, o, and p are as defined for the general formula (I).

**14.** The polymer compound according to claim 13, wherein, in the general formula (II), $Ar^1$ is a structure represented by the following general formula (III):

[Chemical formula 65]

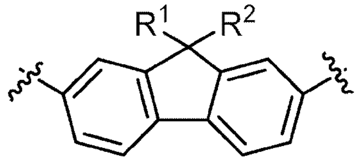

(III)

wherein each of $R^1$ and $R^2$ is independently an alkyl group, a cycloalkyl group, or an aromatic group, each optionally having a substituent, and $R^1$ and $R^2$ optionally together form a ring.

**15.** The polymer compound according to claim 12, which is used as an electrolyte in an anode catalyst layer and/or a cathode catalyst layer for a polymer electrolyte fuel cell.

**16.** A catalyst layer for a polymer electrolyte fuel cell, comprising the compound according to claim 14 or 15.

Fig. 1

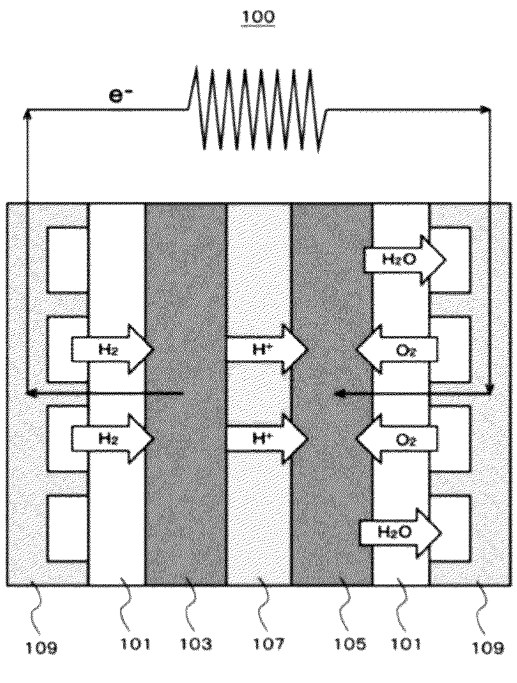

**INTERNATIONAL SEARCH REPORT**

International application No.
**PCT/JP2023/004243**

**A. CLASSIFICATION OF SUBJECT MATTER**

***H01M 4/86***(2006.01)i; ***C08G 61/10***(2006.01)i; ***H01B 1/06***(2006.01)i; ***H01M 4/90***(2006.01)i; ***H01M 8/10***(2016.01)i
FI: H01M4/86 B; H01M8/10 101; H01M4/90 M; H01B1/06 A; C08G61/10

According to International Patent Classification (IPC) or to both national classification and IPC

**B. FIELDS SEARCHED**

Minimum documentation searched (classification system followed by classification symbols)

H01M4/86; C08G61/10; H01B1/06; H01M4/90; H01M8/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-191123 A (HITACHI, LTD.) 27 August 2009 (2009-08-27) paragraphs [0014]-[0072], fig. 1, 2 | 1, 5, 8-12, 15-16 |
| A | paragraphs [0014]-[0072], fig. 1, 2 | 2-4, 6-7, 13-14 |
| X | JP 2007-294408 A (TOYOTA CENTRAL R&D LABS., INC.) 08 November 2007 (2007-11-08) paragraphs [0017]-[0111] | 1-2, 5, 8-13, 15-16 |
| A | paragraphs [0017]-[0111] | 3-4, 6-7, 14 |
| X | WO 2013/183386 A1 (JSR CORP.) 12 December 2013 (2013-12-12) paragraphs [0022]-[0330] | 1, 5-6, 8-12, 15 |
| A | paragraphs [0022]-[0330] | 2-4, 7, 13-14 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/004243**

| Patent document cited in search report | Publication date (day/month/year) | Patent family member(s) | Publication date (day/month/year) |
|---|---|---|---|
| JP 2009-191123 A | 27 August 2009 | (Family: none) | |
| JP 2007-294408 A | 08 November 2007 | US 2010/0197815 A1<br>paragraphs [0021], [0222]<br>WO 2007/110766 A2<br>CA 2646647 A1<br>CN 101415744 A | |
| WO 2013/183386 A1 | 12 December 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7301002 B
- JP 2015095424 A
- JP 2014522437 A
- JP 2022058315 A
- JP 2022126985 A


### Non-patent literature cited in the description


- *Macromolecules*, 2013, vol. 46, 370-374
- *Macromolecules*, 2021, vol. 54, 725-735